# EUROPEAN PATENT APPLICATION

(11) **EP 1 117 220 A1**
(43) Date of publication of application: **18.07.2001**
(21) Application number: 00100738.4
(22) Date of filing: 14.01.2000
(51) Int. Cl.: H04L 29/06

(54) **Method and system for protocol conversion**

(71) Applicant: Sun Microsystems, Inc., Palo Alto, California 94303-4900 (US)
(72) Inventor: Hütsch, Mattias, 22111 Hamburg (DE); Hofmann, Ralf, 22143 Hamburg (DE); Sommerfeld, Kai, 21149 Hamburg (DE)
(74) Representative: Frank, Veit Peter, Dipl.-Ing.

(57) **Abstract**

A network portal system is provided, which serves for linking, via a communication network, provider systems with client systems, each said provider system offering content according to a predetermined communication scheme, each said client system supporting a predetermined communication scheme, said network portal system comprising webtop means for receiving a content request from a client system, said request comprising a content indicator being indicative of the content, and an indicator of the requesting client system, said client system indicator specifying the communication scheme supported by said client system, universal content broker means for selecting a provider system which is able to provide said content, for accessing said selected provider system, and for retrieving said content from said accessed provider system, said webtop means being adapted for rendering the retrieved content to said client system according to the communication scheme of said client system. Further provided is a method of linking a provider and client systems.

## Description

The present invention relates to a network portal system, and in particular to a technology for creating and operating a network portal system.

A portal is understood to be an interface system which is placed between provider systems and client systems in a network, for enabling communication between the provider systems and the client systems. Provider systems are understood here to be computer systems which provide content or services via a network to client systems. The client systems represent the user of the content or services.

In this context, the term "content" denotes any information, which may be of any kind, and comprised in any physical or logical format which is suitable to be transmitted over a communication network. In particular, content may be of the form of electronic files, residing on a server, or it may be generated by a particular program application.

The term "service" is understood to comprise in particular communication based services (e.g.: e-mail, ftp transmission) as well as rendering functionality like word-processing or drawing capabilities, or rendering information content (e.g., documents).

The great number of different content and services available over a network like the internet have lead to an enormous variety of different communication standards, data formats and file formats, which are sometimes proprietary for the particular content and services. Communication standards, i.e., protocols which define the way of communication of between two systems, and the MIME type which defines the type of content, are here referred to as communication schemes. In general, the communication scheme supported by a system is contained in the system's identifier in the network, or in the identifier of the particular service or content provided by the system. As identifier for systems, services or content, the Uniform Resource Locator (URL) is used. A URL always starts with a communication scheme which is to be used for accessing the appropriate provider system. An example may be: "imap://user@mailserver/inbox". The communication scheme is here the IMAP protocol. This URL specifies a message which is located in a folder "inbox" of a provider system "mailserver ".

As a consequence, services or content provided by some provider systems may be incompatible with services or content provided by other provider systems and thus have a "stove-pipe" nature as to their presence and operation on networks. In addition, there exist many different communication schemes for content or service, which communication schemes again may be incompatible and not universally accessible or supported by all client systems.

It is therefore an object of the present invention to provide a network portal system, as well as a method for operating a network portal system in a network, which allow the universal and integral use of different services by arbitrary client systems.

This objects is achieved by the systems and methods according to the respective independent claims. Particular embodiments thereof are defined in the dependent claims.

According to the invention, a network portal system is provided, which serves for linking, via a communication network, a plurality of provider systems with a plurality of client systems, each said provider system offering content according to a predetermined communication scheme of a plurality of different communication schemes, said content being information which is transmittable over said network, each said client system supporting a predetermined communication scheme of said plurality of different communication schemes, said network portal system comprising:
a) webtop means for receiving a content request from a client system, said request comprising a content indicator being indicative of the content, and an indicator of the requesting client system, said client system indicator specifying the communication scheme supported by said client system,
b) universal content broker means for selecting a provider system which is able to provide said requested content, for accessing said selected provider system, and for retrieving said requested content from said accessed provider system,
c) said webtop means being further adapted for rendering the retrieved content to said requesting client system according to the communication scheme of said requesting client system.

The invention comprises also a method for linking, via a communication network, a plurality of provider systems with a plurality of client systems, each said provider system offering content according to a predetermined communication scheme of a plurality of different communication schemes, said content being information which is transmittable over said network, each said client system supporting a predetermined communication scheme of said plurality of different communication schemes, said method comprising the following steps:
a) receiving a content request from a client system, said request comprising a content indicator being indicative of the content, and an indicator of the requesting client system, said client system indicator specifying the communication scheme supported by said client system,
b) selecting a provider system which is able to provide said requested content,
c) accessing said selected provider system,
d) retrieving said requested content from said accessed provider system,
e) rendering the retrieved content to said requesting client system according to the communication scheme of said requesting client system.

Thus, the network portal concept according to the invention with its different aspects allows a client to get content from a provider system even if the client system and the provider system may not use the same communication scheme. In the network portal system, the content to be rendered to the client system is converted accordingly. Provider systems are associated with what URL schemes they implement. A service or content is obtained by passing a uniform resource indicator URL to a provider system. The provider system infers what the scheme is and therefore what provider system can create the content. Provider systems will create content objects that implement defined network portal interfaces associated with content such that a client system can infer and or operate on: MIME type, child content, commands, properties, changes to state.

In addition, new content may be created from existing content and stored so as to be retrieved later. The new content may be related to the existing content. An example of which could be an address book that may only store content of type "folder" and "address".

Accordingly, the inventive network portal system delivers the framework for
- Aggregation of existing network portal services so that they are presented for use from single access points.
- Interfacing new and existing application systems and enabling them to be presented as network services.
- Coupling of separate network service provider systems to deliver integrated functional interactions between these previously standalone network services systems.
- Allowing the construction of new network services which are the constructed by joining and reconstituting existing network services.
- Unifying the interfacing to the services, including the user interfaces (UI) and the service provider interfaces (SPI). By unification of the UI framework, users can experience a contiguous "surfing" metaphor for interactions. Unification of the SPI enhances extensibility and the construction of more sophisticated services with the existing services available as common building blocks.
- Creating highly scalable network service portal infrastructure, using distributed service portal servers - effectively a web of network portal systems.

The inventive network portal system is used for providing the interfacing and aggregation of services via a network, and acts as a content switch leading these streams to the appropriate service filters of the network portal system, e.g. Office productivity, file format conversion, user interface management, etc. The inventive network portal system is a framework designed to unify the access, modification and creation of structured information.

Services or content such as file systems, databases, mail and news in addition to files, records, mail and news messages may be represented abstractly using the inventive network portal system.

A hierarchy of content may be represented according to the concepts of parent-, peer-, child-relationships.

Further, content may be considered as being tasks, which in turn may be further split into higher forms of properties, and commands. Values of properties may be set and obtained. Content may have a set of commands that operate on it.

The communication network may be of any type suitable for communication between computer systems, wired, partially or totally wireless. The computer systems may be of any type of processing environments, and of any size. They may be embedded into other systems.

The invention can be implemented by a computer system comprising computer program code or application code. Computer program code or application code may be embodied in any form of a computer program product. A computer program product comprises a medium configured to store or transport computer-readable code, or in which computer-readable code may be embedded. Some examples of computer program products are CD-ROM disks, ROM cards, magnetic disks or tapes, service on a network, and carrier waves. The computer program product may also comprise signals which do not use carrier waves, such as digital signals transmitted over a network. The computer program product may then be implemented as any transmission link, such as a connection to the internet, or any LAN, WAN, telephone network, or the like.

The invention and particular embodiments thereof are described in connection with the drawings, wherein
- Fig. 1: gives a general overview of a network in which a network portal system is operated,
- Fig. 2: illustrates an embodiment of the inventive network portal system in greater detail,
- Fig. 3 to 5: illustrate operations of the universal content broker,
- Fig. 6: illustrates the method for linking provider systems with client systems by using the network portal system according to the invention,
- Fig. 7 and 8: illustrate linking a client mobile telephone system to a network portal system,
- Fig. 9: illustrates the administration procedure for making a client system ready for login,
- Fig. 10: illustrates accessing content by a client computer running a browser, and
- Fig. 11: illustrates the conversion of content..

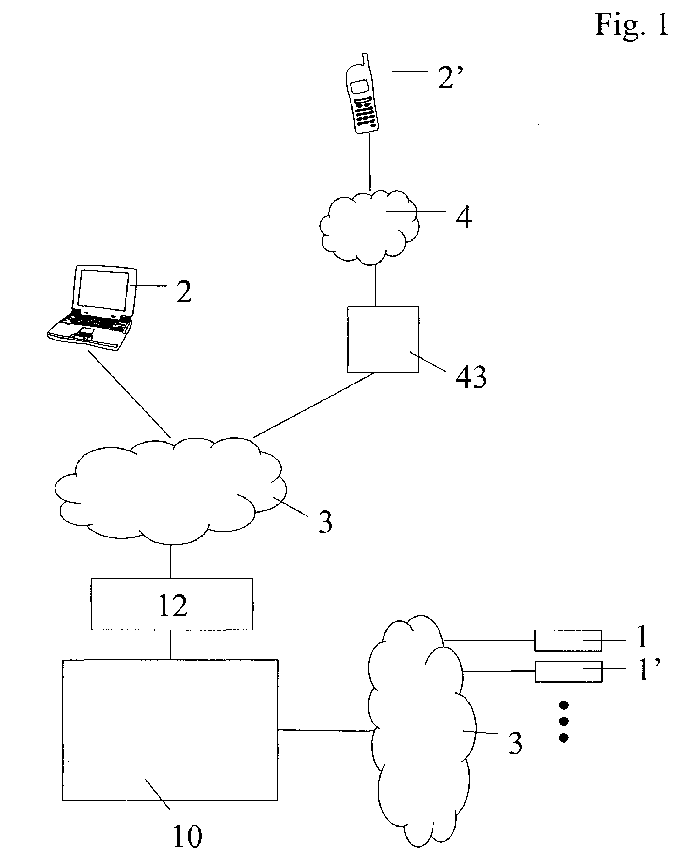

Referring to Fig. 1, the network portal system 10 according to the invention is illustrated to be placed between provider systems 1, 1' and client systems 2, 2' in a network 3. Between the network portal system 10 and the clients 2, 2' placed is a network server 12 which in turn is connected to the network 3. If the network 3 is the internet, the network server 12 may be an HTTP server. The network server 12 is adapted for performing communication with any client system 2, 2' via the network 3, for ex., receiving requests for content from client systems and transmitting responses produced within the network portal system 10 to the respective client systems 2,2'. Client system 2 is illustrated to be a computer, and is supposed to execute an internet browser program. Client system 2' is illustrated to be a mobile telephone which is linked to a mobile telephone network 4 which has a gateway 43 to the network 3. The provider systems 1, 1' are adapted to offer content such as data bases, file systems, for access or use for client systems 2, 2'. Provider systems providing arbitrary other content may be linked to the network, too. It is to be noted that the communication connections mentioned here may be of permanent or temporary nature. They may be physically direct or indirect.

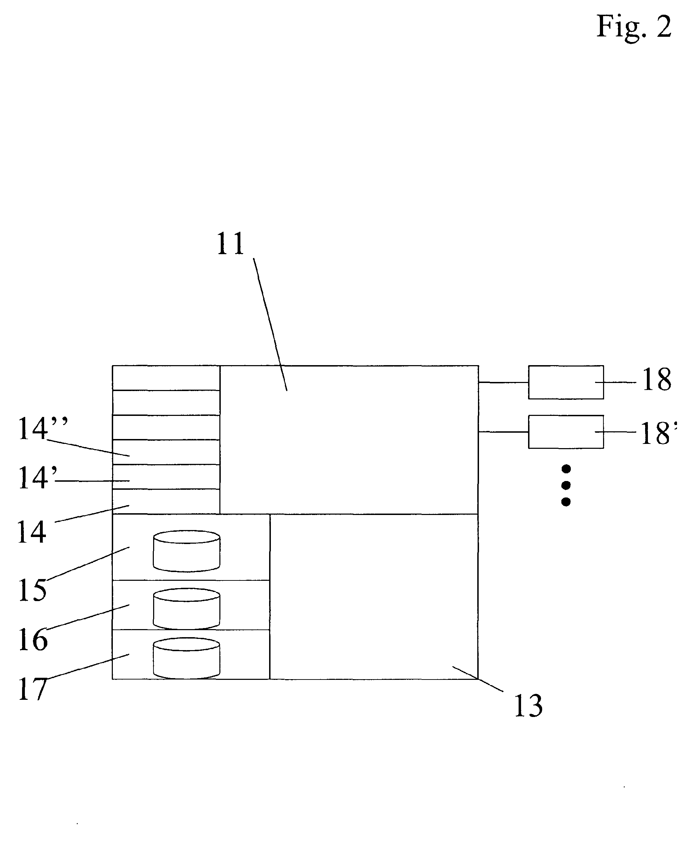

The inventive network portal system 10 according to the embodiment illustrated in Fig. 2 is divided into several subsystems. One of them are the means 11 which are adapted to deliver content in a communication scheme as required by the particular client systems 2, 2'. The means 11 are referred to as a webtop.

Another subsystem of the network portal system 10 is constituted by the means 13 which interact with the provider systems 1, 1' for accessing and retrieving content. These means 13 are referred to as universal content broker (UCB) 13.

The webtop 11 is a software implementation to provide a metaphor to client systems for accessing content. The webtop 11 comprises a user interface which is defined in different XML, HTML or WML templates in order to be able to present content in the form as required by any individual client system. These templates define together with the stylesheets and the rendering process the visual look and feel of the network portal system 10. Hereby, the templates define elements of the content to be presented. Examples of such elements are text, tables, images, file names. The stylesheets define the form how the elements are to be presented on an individual client system. As an example, a stylesheet may define the layout of the elements on a page to be displayed on the a screen. To deliver content to a client system via this rendering process, the content has to become a part of the template. On the other hand, the content is not static and will change over time, and also the templates are independent from the client system.

Depending on the capabilities of a particular client system which communicates with the webtop 11, one of these templates is selected for interaction with the particular client system. The webtop 11 loads the template, fills in all user specific content data, and this new temporary template is processed by a stylesheet and transmitted to the client system.

For example, if the user is accessing his email via a browser, the template will be an HTML file. The webtop 11 uses UCB 13 to get the content of the mails and insert the data as an HTML table in the HTML template. This template includes the user specific mail data, and is then processed through the stylesheets and transmitted to the client system.

The webtop 11 may be implemented in Java as different servlets, so it can easily communicate with different kinds of network servers 12. The webtop 11 is using a special template core engine, which is able to insert dynamic data into the templates and renders these templates according to different stylesheets. With these stylesheets, the webtop 11 can be adapted to special client systems or user purposes. It comprises for example the logic for presenting e-mail content in a kind of folder view to a client system.

As concept for offering content to a variety of different client system, the framework of individual data representation according to Annex II may be applied. By definition of dynamic content channel "portlets", highly customizable content pages may be produced for any individual client system. Every portlet defines in which format the content can be provided. The client can subscribe to any of the available portlets. The framework and all portlets are implemented as servlets running on the webtop 11.

With respect to client systems, the webtop 11 may perform login procedures. Furthermore, authentication procedures for client systems may be required for requesting particular content from the network portal system 10.

The UCB 13 interacts with the provider systems for retrieving the content requested by a client system. The access is performed on the basis of the request transmitted by the client system to the network portal system 10. The request specifies the service, and comprises an indicator specifying the client system and the communication scheme to be applied for communicating with the client system.

As an example, the UCB 13 may provide an hierarchical view to all content, which is provided by a provider system, regardless of the content type. A unified navigation through all content can be may be enabled for all kinds of client systems. The standard information exchange services like e-mail, news, calendar, directory, databases, internet communication, web content and file storage are supported by the UCB 13, and for the integration of additional content or applications, interfaces for the integration of content providers are supported by the UCB 13. For example, on top of the UCB 13, an application is able to navigate through the e-mails of an client like navigating through a calendar server. The hierarchical view to all this information can be configured dynamically.

The provider systems 1, 1' which may be accessed by the UCB 13 for retrieving content are contained in a provider register 15 in association with the communication scheme they support. The UCB 13 has access to that provider register. Optionally, the UCB 13 is maintaining the provider register 15, i.e., registering provider systems, or de-registering provider systems.

In a further embodiment of the network portal system 10, the UCB 13 is adapted to store content in a local storage 16. The content is stored in association with the URL of the content. This feature permits using or processing the content without being permanently connected to the provider system where the content has been retrieved from.

The interface used in the UCB 13 for storing content allows the usage of different implementations. For a small network portal system 10, the functionality of this implementation may be an ordinary file. To provide scalability of the network portal system 10, a database can be used with an adapter providing the implementation of the interface. This opens a functionality not just using the UCB 13 to access this content, but also other application software may working together with the database to access the stored content.

For increasing the availability of a network portal system, the replication features of a database system may be used for maintaining an identical copy of the database on a second computer system. Then, if the first computer fails by a hardware or software failure, the second computer system can provide the same functionality like the first one.

In a further embodiment, the UCB 13 is adapted to associate properties to content which is retrieved from a content provider system. These properties may contain additional information with respect to the content. The properties are set or changed by the UCB 13. The properties or attributes are transmitted along with the retrieved content to the respective client system. The properties along with the association with the content (referenced by its URL) are stored in a storage which is accessible by the UCB 13. Whenever a request for the content is received by the UCB, the storage is looked up for its associated properties on the basis of its URL. The properties may then be transmitted along with the content to the client system.

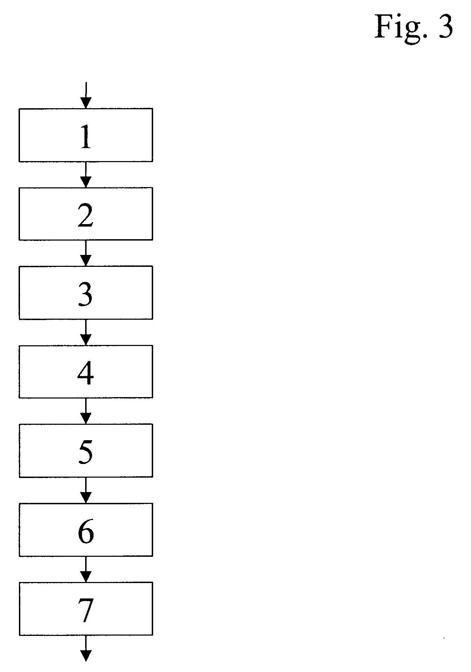

The retrieval of content by the UCB 13 is explained with reference to Figures 3 to 5.

Fig. 3 illustrates the retrieval of content constituting a message on an IMAP server with an associated property. An example for such an URL may be: imap://user@mailserver/inbox;UID=3. Accordingly, the content has an associated property value UID set to 3. In the first step 1, the URL is passed from the webtop 11 to the UCB 13. In step 2, the UCB 13 searches the appropriate provider system for the IMAP communication scheme based on the provider register to which the UCB has access. Then, in step 3, the UCB connects to the appropriate provider system and transmits the URL to it. In step 4, the provider system analyzes the URL and creates an IMAP message content. In step 5, the IMAP message content is transmitted back to the UCB 13. In step 6, the UCB 13 passes the received content to the webtop 11, which in turn fits it into the template and forwards it to the client system (step 7).

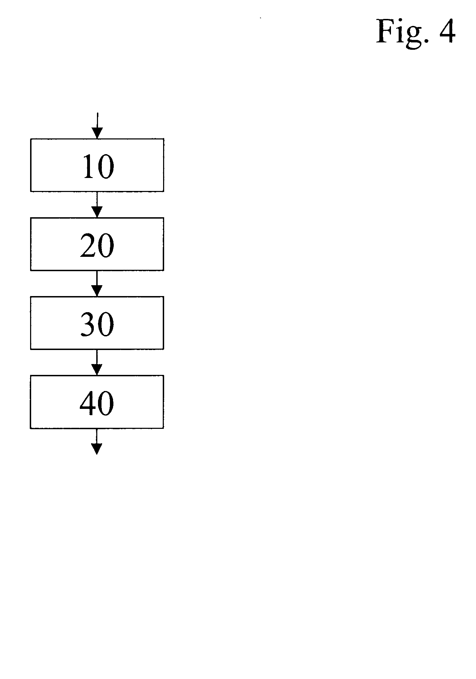

Fig 4 illustrates an example of setting a property value which is associated with a message of an IMAP server. Upon request by a client system, the UCB 13 performs a step 10 for retrieving content as specified by the URL of the IMAP message. Then, in step 20, the value of the content property "IsRead" is set to "true". In step 30, the UCB 13 connects to the IMAP server and instructs the IMAP server to mark the message as read. In step 40, the message data in a cache storage in USB 13 is updated.

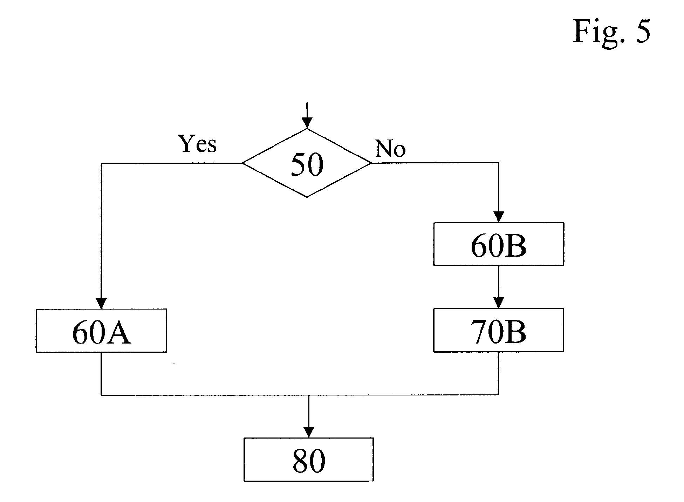

A property may also be retrieved from a message on an IMAP server. Fig 5 illustrates an example of retrieving a property value. First, the UCB checks whether the message data is stored in a local cache of the network portal system 10 (step 50). If so, the property value is retrieved from the local cache (step 60A). Otherwise, the UCB 13 connects to the IMAP server and downloads the message (step 60B). The downloaded message is then stored in the local cache (step 70B). In both cases, the property value is read and returned to the client system (step 80).

The UCB 13 may be further adapted to automatically notify individual client systems whenever new content is created by the UCB 13. To this end, the functionality of creating new content is associated with the individual client systems ("listeners"). When the UCB 13 creates new content, the UCB 13 notifies the individual listeners.

Further, the UCB may be adapted to automatically notify individual client systems whenever particular content is processed by the UCB 13. For this functionality, the UCB 13 maintains a register where the URL of the content is associated with the URL of the individual client systems to be notified are registered. Then, whenever content is processed, it is verified whether there is an association of that content with listeners. If so, the associated listeners are notified.

The notification may be dependent upon the kind of content processing. Some listeners may be informed whenever content is changed, some listeners may be informed when content is deleted.

The notification mechanism may be used for synchronizing several client systems, i.e., for updating content changes initiated by one client systems to other client systems.

The generic application programming interface (API) for a content provider system can be extended by additional content or services because the UCB 13 is based on a component technology which is able to support dynamic interfaces. This allows a system architect not only to use the UCB 13 as a kind of central access system to all content or services, nor it is only a kind of navigation system for users to go through the available content, it provides moreover an infrastructure for building large enterprise applications, where the ability for acting with different content and the exchange of content is required. The uniform access guarantees that the whole system can be adapted to different infrastructures, without interfering the different applications on top of the UCB 13.

Depending on the capabilities of a client system, the network portal system 10 can not only provide the information to a user for viewing content. If a client system 2, 2' is able to execute Java applications, particular Java components 14, 14' can be used in the templates which deploy the functionality of a word-processor or spreadsheet to the client system 2, 2'. Using a standard Java enabled internet browser, a user may be able to write or only change very complex documents on any client system 2, 2' running just a browser which has a network connection to the network portal system 10. Another solution is to dynamically transcode from one file format to another while transmitting the content. For a native running application on, for example, a palm system this enables the ability to modify a document using this client system. Later, the modifications made on the palm system documents can be transmitted back to the network portal system 10 and can be applied to the document in the original format.

For client systems 2, 2' which are not permanently connected to the network 3, the network portal system 10 provides the ability to synchronize the content of the two UCB via a synchronization component 14". A user can read and change his documents while being off-line and after he is going online he can synchronize all this changes with the network portal system 10.

Optionally, the webtop servlet is accessing this information by using the network portal system API. This is a language independent API for accessing all the functionality of a predetermined Office program bundle comprising word-processing, drawing, calculating, tabulating, file displaying capabilities. Then, the same UCB 13 can be used by the Office program bundle and also by the network portal system, so a client can use the Office program bundle while working in his office and on the other hand he can use the network portal system to access all his files and information via the network portal system when he is not in his office.

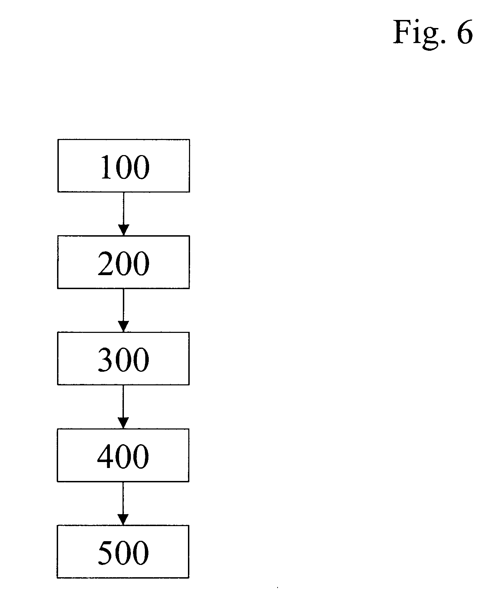

Next, by referring to Fig. 6, the inventive method for linking a plurality of provider systems with a plurality of client systems via the network portal system 10 is explained. In step 100, a content request is received from a client system (2, 2'), said request comprising a content indicator being indicative of the content, and an indicator of the requesting client system (2, 2'), said client system indicator specifying the communication scheme supported by said client system (2, 2). Then, in step 200, a provider system (1, 1') is searched which is able to provide said requested content. In step 300, said selected provider system (1, 1') is accessed. In step 400, said requested content is retrieved from said accessed provider system (1, 1'). Finally, in step 500, the retrieved content is rendered to said requesting client system (2, 2') according to the communication scheme of said requesting client system (2, 2').

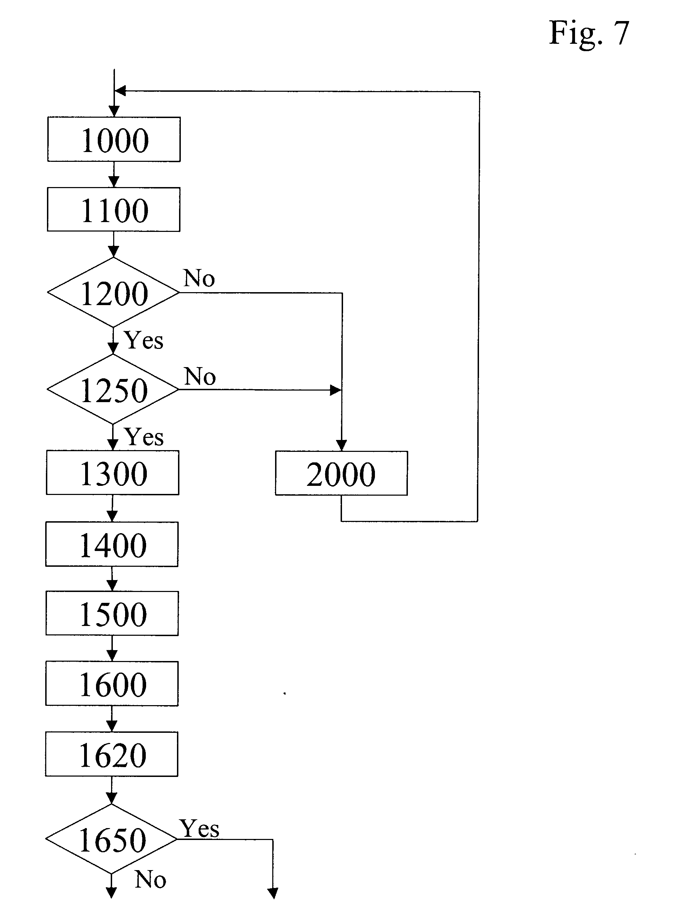

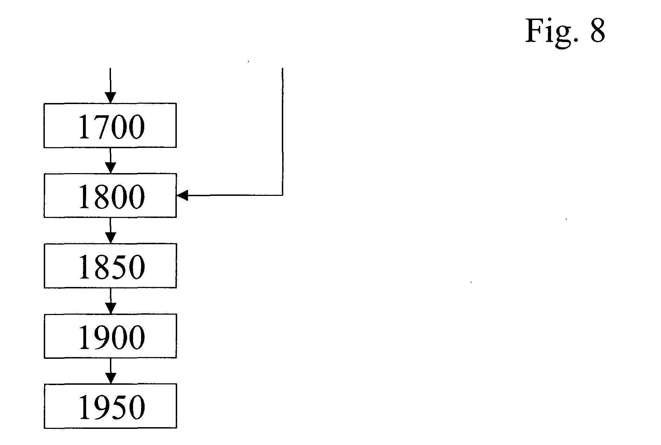

Next, by referring to Figs. 7 and 8, the method for providing content to a client system is explained. The client system requesting content is a mobile telephone 2'.

First, in step 1000, the HTTP server 12 receives a request sent from the mobile telephone 2'. The request comprises the requested content as well as the URL of the mobile telephone 2'. The request is passed by the HTTP server 12 to the webtop 11 of the network portal system 10 (step 1100).

In the step 1200, a login procedure for the mobile phone 2' onto the webtop 11 is started. If the login fails, the webtop 11 initiates an administration procedure 2000 in which an ID and a password for client system 2' is defined. The administration procedure 2000 will be described later.

On the other hand, if the login in step 1200 is successful, an authentication procedure 1250 is started in which the identity as well as accessing rights of the mobile telephone 2' are verified. If the authentication fails, the client administration procedure 2000 is initiated.

If the authentication in step 1250 is successful, the webtop 11 selects the template as specified by the received URL (step 1300).

The content request is passed from the webtop 11 to the UCB 13 (step 1400), which in turn accesses the provider register and selects therefrom the appropriate service provider system 1, 1' for retrieving the content (step 1500).

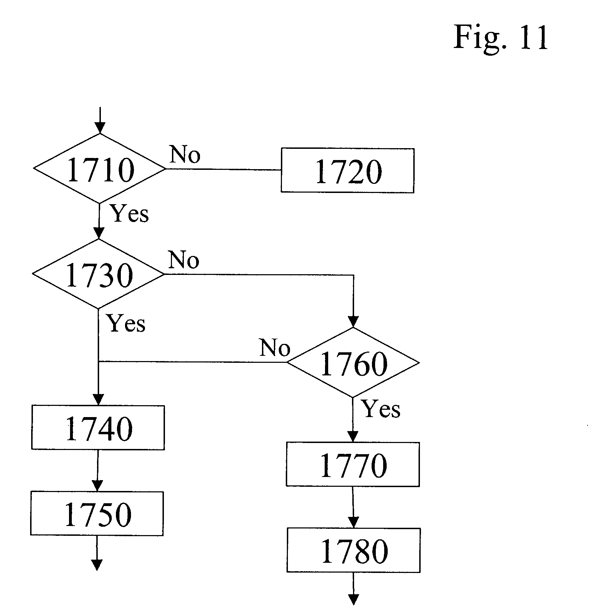

The content is then delivered by the selected provider system 1, 1' to the UCB 13 (step 1600). The UCB 13 passes the received content to the webtop 11 as it is (step 1620). Then, in step 1650, the webtop 11 checks whether or not the communication schemes of the provider system and client system match. If not so, the webtop 11 invokes a conversion procedure (step 1700) is in which an appropriate conversion component 18, 18' for converting the content of the provider's scheme into a representation according to the client's scheme is executed. The conversion procedure will be described later in connection with Fig. 11.

Then the webtop 11 fits the converted information into the selected template (step 1800). Then, a stylesheet according to the MIME type of the client system 2' is selected (step 1850). The template is rendered according to the selected stylesheet (step 1900), forwarded via the HTTP server 12 to the client mobile phone 2' having requested the content (step 1950).

On the other hand, if the communication scheme of the selected provider 1, 1' corresponds to the communication scheme of the client 2', step 1700 is stepped over, and the retrieved information can be fit directly without further change into the template, rendered according to the selected stylesheet and forwarded via the HTTP server 12 to the client system 2'.

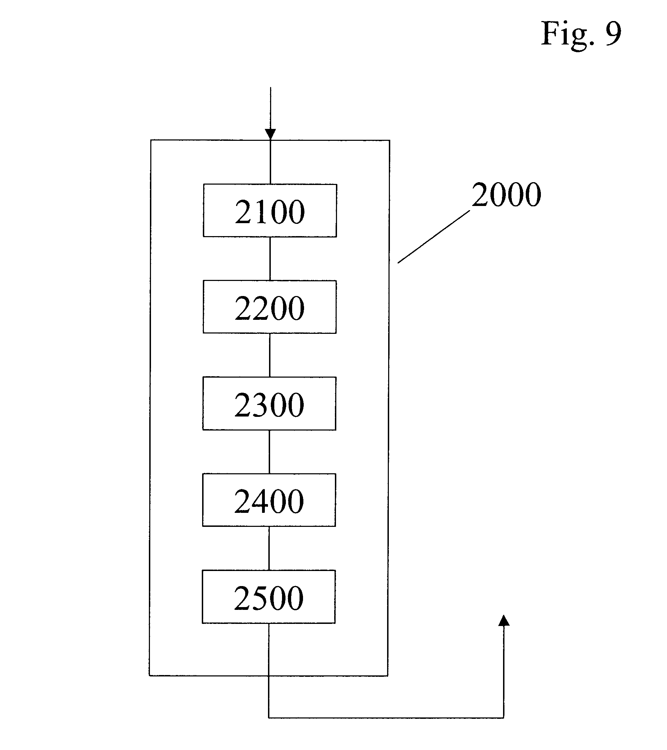

Next, referring to Fig. 9, the administration procedure 2000 an administration procedure in which an ID and a password for a client system is described in greater detail. In step 2100, the webtop 11 selects a stylesheet according to the communication scheme of the client system. In step 2200, a login template according to the communication scheme of the client is rendered. A number of login templates, each being specific for a certain MIME type, are available to the webtop 11. In step 2300, the selected login template is transmitted, via the HTTP server 12, to the client system requesting the login. Upon receiving the login template, the client system can initiate the login procedure (step 2400). This login procedure comprises defining a login and a password for the client system (step 2500).

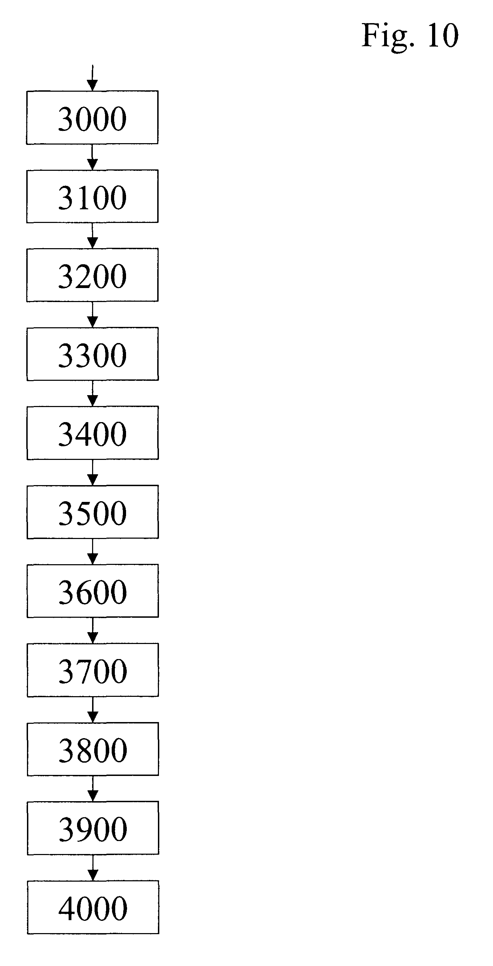

Referring now to Fig. 10, a case is described where the client system is a computer 2 executing a browser program, which accesses the network portal system 10 for requesting content to be displayed within the browser. For displaying the content, the service of a specific drawing component 14 is assumed to be necessary. This component 14 is hosted in the network portal system 10 together with other service components 14', 14". For using the services of said components 14, 14', 14", specific applets are provided by the network portal system 10. These applets have to be transmitted from the network portal system 10 to the client computer 2 prior to the content.

The login procedure for computer 2 is basically the same as described above in connection with Fig. 9 and is omitted here.

From the browser program being executed on computer 2 a request to the HTTP server 12 is sent for retrieving the content (step 3000). The request is passed to the network portal system 10 (step 3100). The webtop 11 selects the template and the specific applet for using the drawing service of component 14 (step 3200). The content identifier URL is entered into the template (step 3300). The webtop selects as stylesheet according to the MIME type "HTML" (step 3400), and renders the template accordingly. The applet, embedded into an HTML page according to the selected template, is transmitted to the computer 2 (step 3500).

Now, the procedure for providing the requested content is started. First, the specific applet being executed on client computer 2 connects to the webtop 11 (step 3600). The related service component 14 is called in order to load the content as specified by the URL (step 3700). The content is requested from the UCB 13 (step 3800). The UCB 13 in turn accesses the content according to the URL and passes it to the service component 14 (step 3900). The service component 14, upon call by the related applet on the client computer 2, renders the service necessary for drawing the content information in the browser upon transmitting it to the client computer 2 (step 4000).

Referring to Fig. 11, the conversion of content is described. Conversion is invoked whenever content according to one communication scheme is to be transcoded into content according to another communication scheme.

First, it is checked whether the webtop 11 can process the content (step 1710). If not so, an error message is issued to the client system (step 1720). On the other hand, if the webtop 11 can process the content, it is then checked (step 1730) whether the content is to be edited on the client system or only to be displayed there. If the content is only to be displayed on the client system, the best matching communication scheme supported by the client system is selected as scheme of conversion (step 1740). Then, the corresponding conversion component 18 is executed in order to convert the content (step 1750), and the converted document is then ready for being transmitted to the client system as described above.

On the other hand, if the content is to be edited by using webtop functionality, it is checked whether the client system is able to execute the corresponding Java applets which invoke the editing functionality (step 1760). If so, the webtop 11 generates a template for a HTML page with an applet embedded therein and sends it to the client system (step 1770). The conversion of the content is performed on the fly when transmitting it to the client system (step 1780).
However, if the client system is not able to execute Java applets, steps 1740 and 1750 are performed as described above.

If content is represented in XML format, this offers the potential for the synchronization of content between various content provider systems that implement the same content schema but obtain or store content differently. The synchronization process them becomes a comparison of time stamps and / or the comparison of the XML content, which are both functions independent of the content provider systems. Thus there can be network portal content providers that are implemented for various personal digital assistants (PDAs) which can send and receive XML documents conforming to schema for document areas as such as addressing, calendar and scheduling, and mail.

Special purposes may be applications designed for being executed on particular platforms like handheld computers or mobile telephones, where storage and processing capabilities are particularly limited. Nevertheless, the whole functionality of the framework is still accessible.

The synchronizing of content may also be extended to area of multi-user operation when numerous people may be operating on various areas of the content.

The network portal system offers not only a powerful way of treating heterogeneous content in a homogeneous manner but a way to group heterogeneous content together with network information about content. In a further embodiment of the invention, a network is created which stores URLs that are organized according to the defining semantics or hierarchy of another client rather than the semantics or hierarchy that the content prescribes. This also includes the structure of the content. Network content is not defined by the structure of the content and its children. Thus content may be related to each other in an a-cyclical manner rather than in the direct manner that file systems are represented. In addition it is possible to inherit network content structure and augment or modify it without modifying the original.

An example is a network portal system specially used for management of projects on which different teams are working. For the automobile manufactures most often a team of engineers, marketing specialists and finance experts are working together. One team mostly need some information from the other and also provides information to the other. The only difference is which data is important is important for one team and how these should be organized in the best way for them. For example the engineering team will produce CAD-drawing and detailed lists of item needed to build a peace of an automobile of the project. On the other hand the finance experts are not interested in the CAD-drawing and also not on the detailed list of items. They are more interested in overall summary which items are need to build the special peace, so they can calculate the price for this and overall calculate the price for the car. The marketing team may be interested in the drawings, because give some feedback if the colors will be accepted by the customers. So every is working on the same project and also on the data files, but the focus which data is used can be completely different.

The network portal system provides this infrastructure by the capability of the UCB to browse through all content and information using the UCB. Adding user specific or task specific properties to a content, enables the sorting or the creation of an hierarchical view to this information, which can be completely different to the physical structure on the disk.

It is also possible to build a similar system using the Java 2 Enterprise Edition as a base system and at the logic and management functionality on top of this in form of Java application or Java beans. Also the whole UCB system can be realized on top of a database, for example an object oriented database or a XML-database.

Referring to the Annex I, an overview of the framework for implementing the network portal system is presented as defined in the interface definition language files. Via these interfaces, the following operations can be achieved: Content is provided. Content is obtained from content providers. Content is defined. The interfaces may be implemented in software and/or hardware components.

### Content providing.

The network portal system provides services to register and maintain implementations of content provider systems. Content provider systems are classified according to what uniform resource locator (URL) schemes they implement. The scheme is the protocol used to connect to the site or host. For Web sites the scheme is http. For IMAP or FTP sites, the scheme is (respectively) imap or ftp.

Thus given a URL the scheme may be obtained. If a content provider system 1, 1' is registered with the corresponding URL scheme then content may be obtained for the URL.

The main network portal service that manages content providers is the UniversalContentBroker and is a one instance service that implements interfaces, including the registering and de-registering interface.

Content provider objects implementing the XContentProvider interface may register and de-register with corresponding schemes. In addition the list of registered content providers may be obtained with their corresponding schemes.

The UniversalContentBroker also implements the XContentProvider interface. Thus it may generate content for all schemes registered and the client does not have to query all content providers. Content is generated via the queryContent method which takes an XContentIdentifier reference and returns an XContent reference.

The XContentIndentifierFactory interface is created from a URL of a content identifier which contains further characterizing information: URL and content identifier.

The XContentIdentifier interface provides methods for maintaining a URL. The URL may be set just once using the setContentIdentifier method. Its scheme may be retrieved using the getContentProviderScheme. Thus the XContentProvider queryContent method will call the getContentProviderScheme to see if it supports the associated scheme before creating content. XContentIndentifier references can be created using the XContentIndentifierFactory reference of the UniversalContentBroker service.

Getting content from a provider system.

Content will be provided by implementing a set of network portal interfaces. A content object will be created by a content provider when an appropriate URL via the XContentIdentifier reference is passed to the queryContent method of an XContentProvider reference.

An example of how content may be obtained is presented in the Annex I, which is referred to in the following. Given a factory interface m_xFac an XInterface reference to the UniversalContentBroker service is created. The three interfaces that the UniversalContentBroker implements are then obtained. Next an XInterface reference to an FTP content provider service is created. The XContentProvider interface reference is then obtained from this. The m_XFTPCP XContentProvider reference is then registered with the m_XCPM XContentProviderManager reference via the regsiterContentProvider method. A XContentIdentifier reference XCID is then created with the URL 'ftp://rimmer/pub'. The XContentProvider reference m_xCP of the UniversalContentBroker service is then used to obtain an XContent reference via the queryContent method.

Once a reference to the XContent is obtained it is possible to transform this to other interfaces that the content object implements.

### Content objects.

A content provider will provide objects that implement a set of interfaces that define: The type of content, notification of when content changes state, how content may be created from this content, what children this content has, what commands may be performed on the content, what properties set and obtained.

Note that not all aspects of the above may be defined. It will obviously depend on the type of content created.

An XContent reference will be return by an XContentProvider. This is a simple interface which will return a MIME type representing the type of content. In addition clients of the content may add themselves as listeners on the content by implementing the XContentEventListener interface and passing the reference to the addContentEventListener method.

When action on content is performed registered clients will get notified via the contentEvent method. Notification occurs when content is:
- Inserted.
   This occurs when a child is inserted into the content. For example if a directory folder is opened its content may be inserted asynchronously into the folder. A client responsible for the display of this content may then update its view according to the new content.
- Removed.
   This occurs when content is removed, but not deleted. An example of this may occur if child content is moved to a different parent.
- Deleted.
   This occurs when the content is physically destroyed. That is the content no longer persists.
- Changed.
   This occurs when the content has changed its identity. For example if a directory folder has changed its name.
- Matches search criteria.
   This occurs when one or more child contents match search criteria.

A content object that has children can implement the XIndexAccess interface. This inherits from the XElementAccess interface. This may be used for content to return children that are also content. The type any returned from the getByIndex method may be cast according to the XContent interface if its valid to do so. Thereby a directory or folder content may return its children in this way.

A content object that also creates content will implement the XContentCreator interface. This defines what type of content may be created via the queryCreatableContentsInfo method. This will return a sequence of ContentInfo, which just contains the mime type of content that may be created.

New content can be created by calling the createNewContent method with the appropriate ContentInfo. This method does not persist the content since what has been created has not been initialized. Initialization may result in property and command operations on the new content. When the content has been initialized it can be inserted into the parent using the insert Content method.

Given a command and task environment an XCommandTask reference will be returned by the method createCommandTask. The Command structure inherits from CommandInfo and additionally contains a field for any which represents the arguments passed as a reference to an object.

The XCommandInfo interface will be obtained from the XCommandTaskProcessor. This interface will be used to obtain and query possible commands. The CommandInfo structure contains the attributes of the command.

An XCommandTask reference is obtained from an XCommandTaskProcessor that the content object implements. It inherits from the XContentTask interface which contains methods to operate on the task at hand. This interface is explained after the properties interfaces, which also use the XContentTask interface, have been presented.

The XPropertyTaskProcessor inherits from the XMultiPropertySet interface. This interface encapsulates similar behavior as the XCommandTaskProcessor interface. Given a type of set of properties and an operation to be performed via the PropertyTaskType (either a set or a get) a XPropertyTask reference will be created from the createPropertyTask method.

The querying of property types is performed through the XMultiPropertySet interface. Thus a content object will have to implement this interface too.

A reference to an XPropertyTask will be obtained from the XPropertyTaskProcessor. Like the XCommandTask this inherits from XContentTask such that the operation can be executed.

The XContentTask interface is a super interface that is used by both the XComandTask and XPropertyTask interfaces. It provides methods to perform the task synchronously or asynchronously via the execute and start methods respectively. If performed asynchronously then event notification will occur through the XContentTaskEnvironment. A reference to the XContentTaskEnvironment is passed when the XContentTask is created by the associated command or property processor interfaces.

The XContentTaskEnvironment provides a context for tasks handle errors and notify when tasks have changed status. An implementation of the XContentTaskEnvironment interface will also include the ability to set the XContentTaskClient reference which is used provide task status feedback.

A client wishing to run tasks on content, either commands or properties will need to implement the XContentTaskClient interface. When task state changes the client will be notified via the contentTaskEvent method. Status will include the old and new state of the task and the XContentTask reference associated with the change in state. The state of the task can be one of the following:
- Created,
- Running,
- Done,
- Aborted.

### Obtaining children from content.

From the content a reference to the XIndexAccess is obtained. The number of children is obtained from the getCount method. Each child is then obtained via the getByIndex method, which is of type Any. If Any can be cast to a reference to a pointer to XContet then a reference, XContent is obtained. The XContentIdenitifier reference is then obtained from XContent. From this the scheme is printed out. From XContent the MIME type is printed out.

### Executing tasks on content objects.

Once an XContent reference is obtained for a content object, it is possible, if supported, to execute tasks on the content to send commands or get and set values of properties.

### Querying commands.

From the content a reference to the XCommandProcessor is obtained. If it is valid then a reference to the XCommandInfo is obtained and from this the sequence of possible commands. The command names are then printed out.

### Executing commands.

A reference to an XCommandTask is created from the reference to the XCommandTaskProcessor with a given Command and reference to the XContentTaskEnvironment. If the task is valid then is it executed synchronously via the execute method. The resultant object of type any is then obtained via the getResult method.

### Querying properties.

From the XContent reference the XPropertyTaskProcessor reference is obtained. If it is valid then the reference to the XPropertySetInfo is obtained via the getPropertySetInfo method. The sequence of property names is then obtained from the get Properties method. The property names are then printed out.

### Get value of a property.

From the XPropertyTaskProcessor reference an XPropertyTask reference is created via the createPropertyTask method and a sequence of properties and a reference to the XContentTaskEnvironment. If the task is valid the property is obtained by calling the execute method. Thus the property is obtained synchronously. The sequence of values is then obtained from the get - Properties method. The value of the first property is then obtained in any.

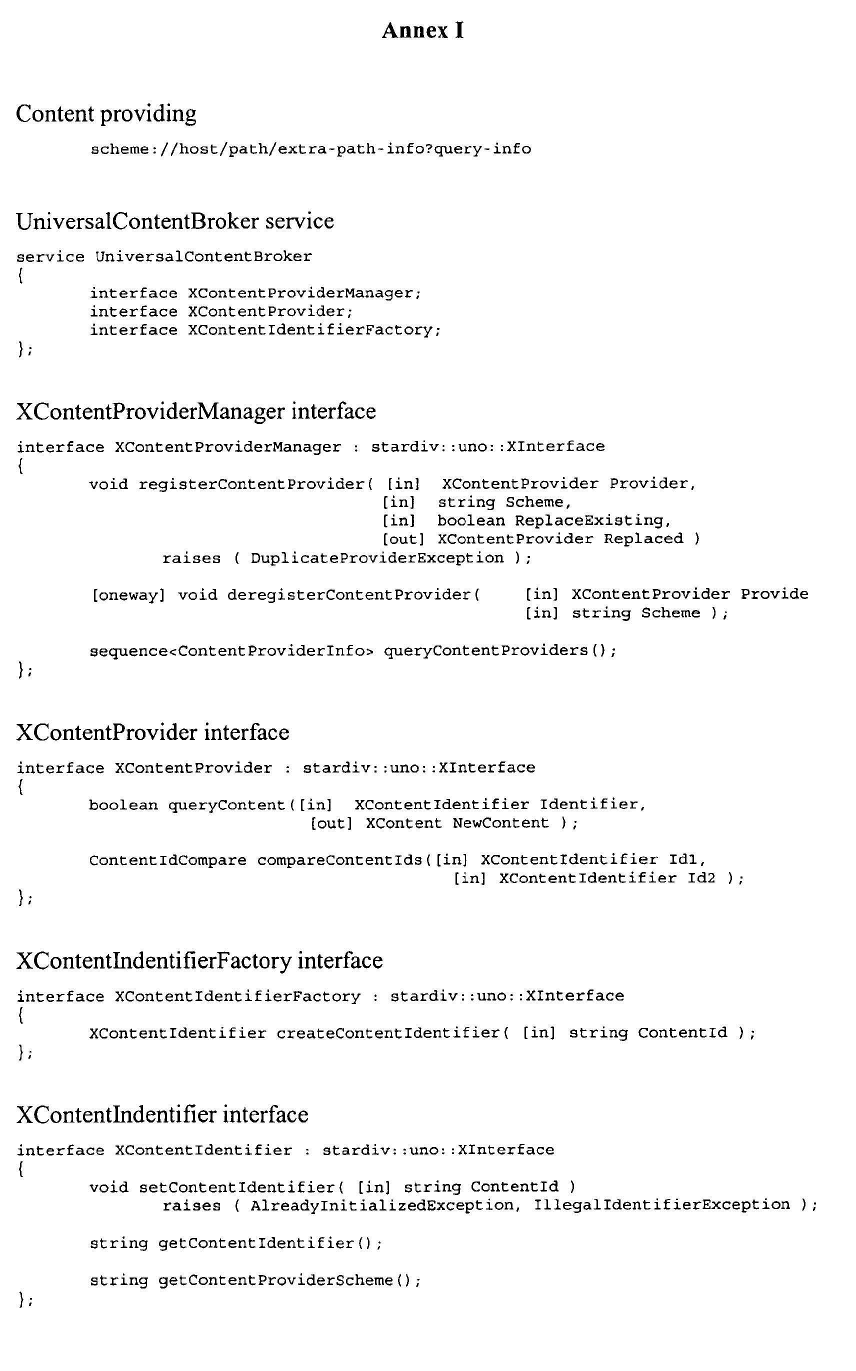

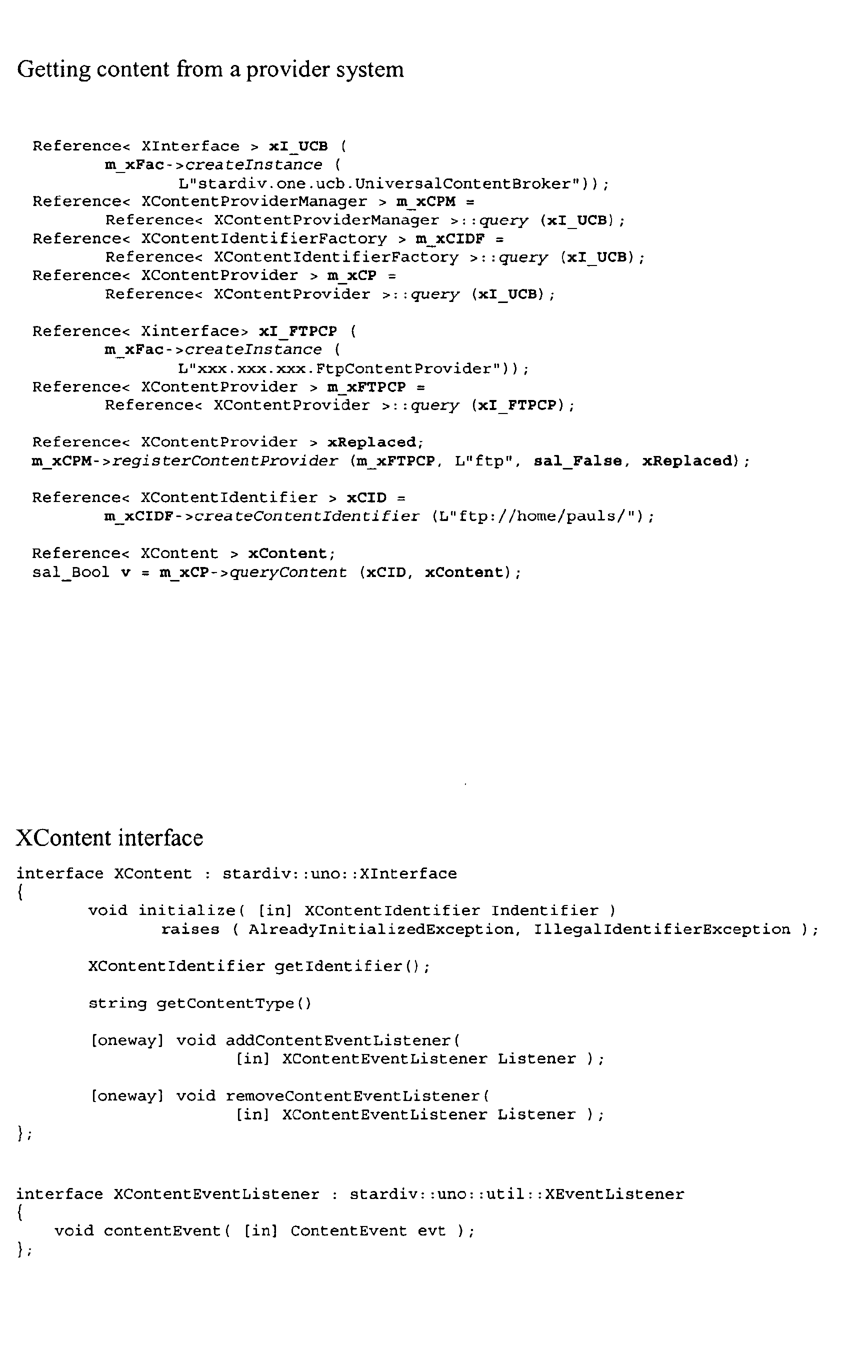

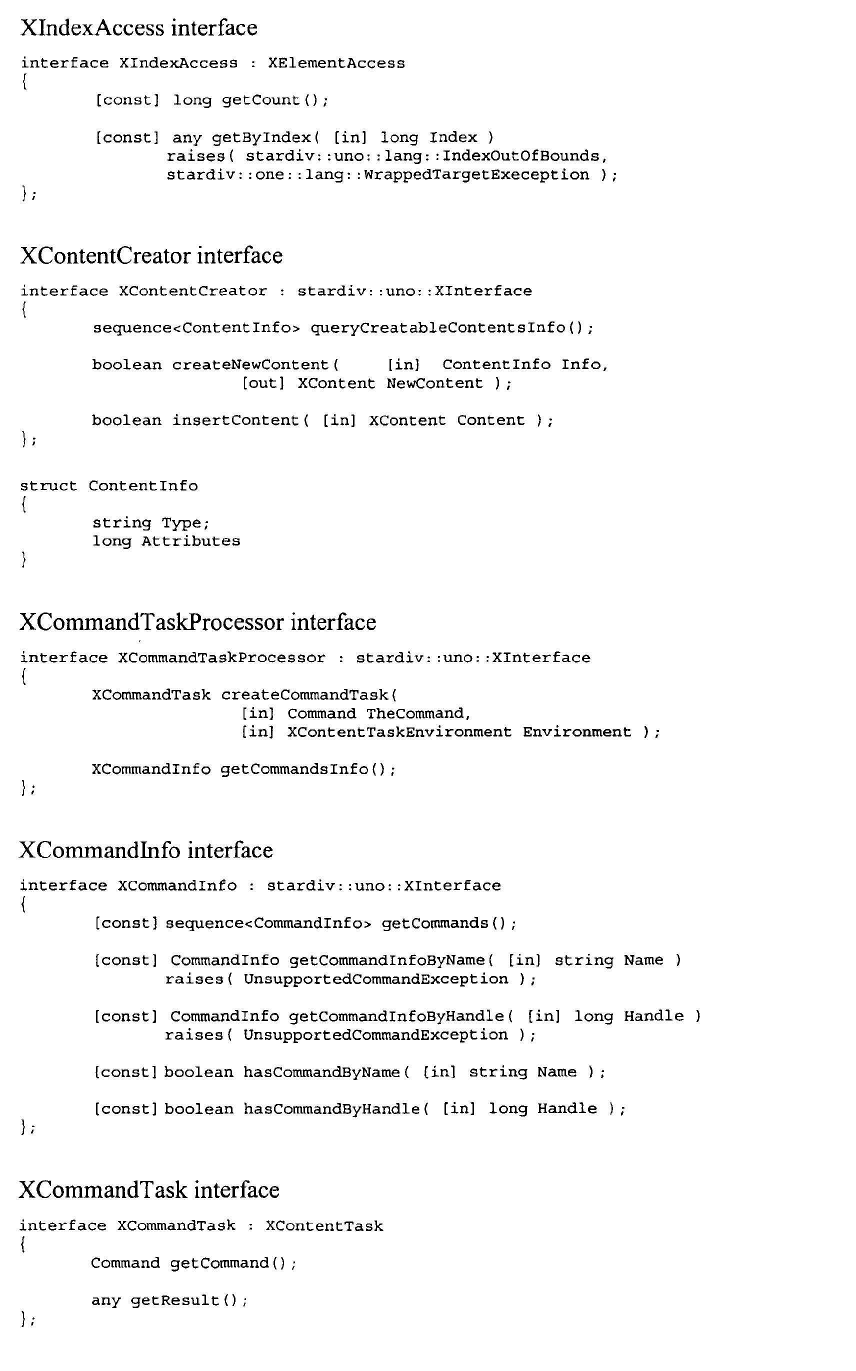

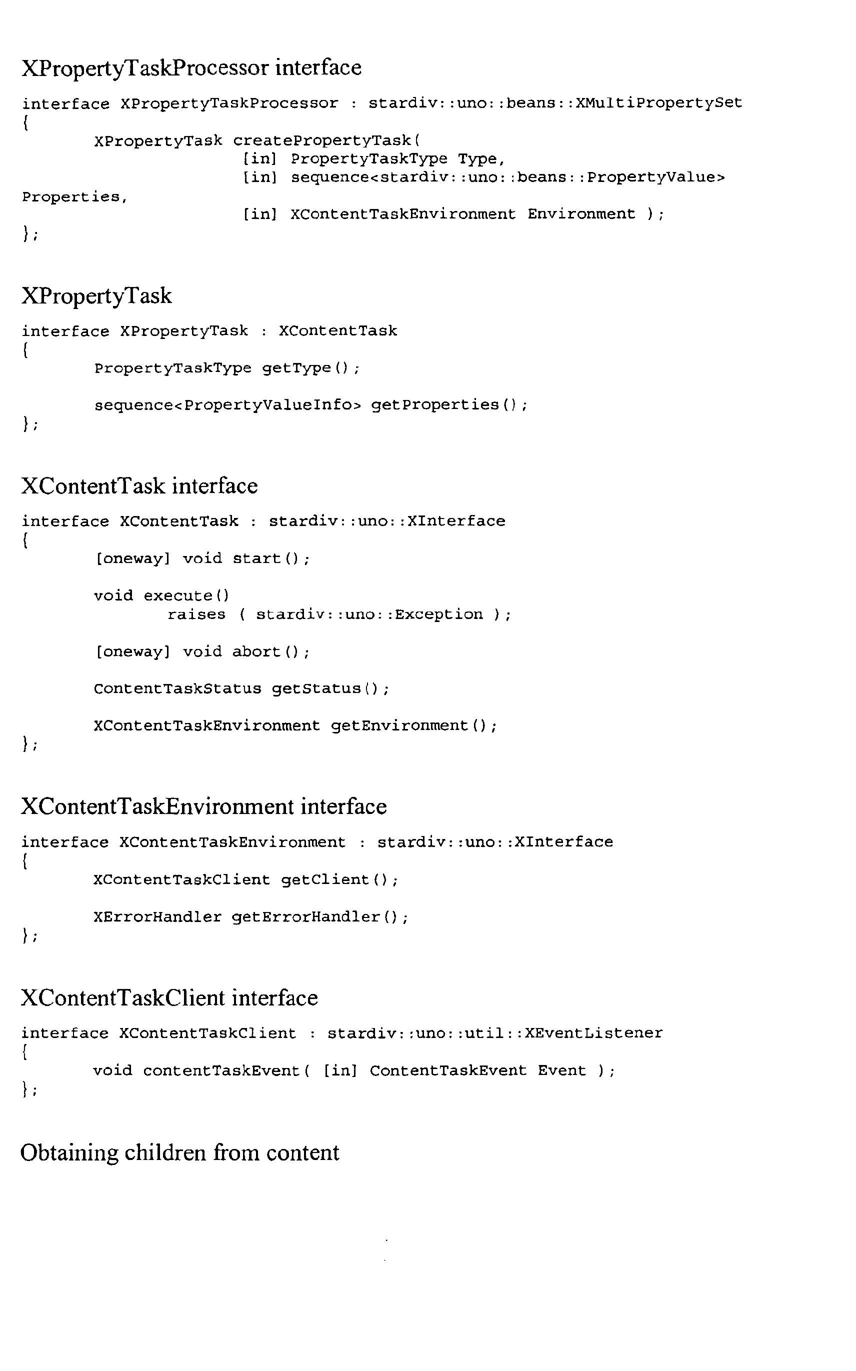

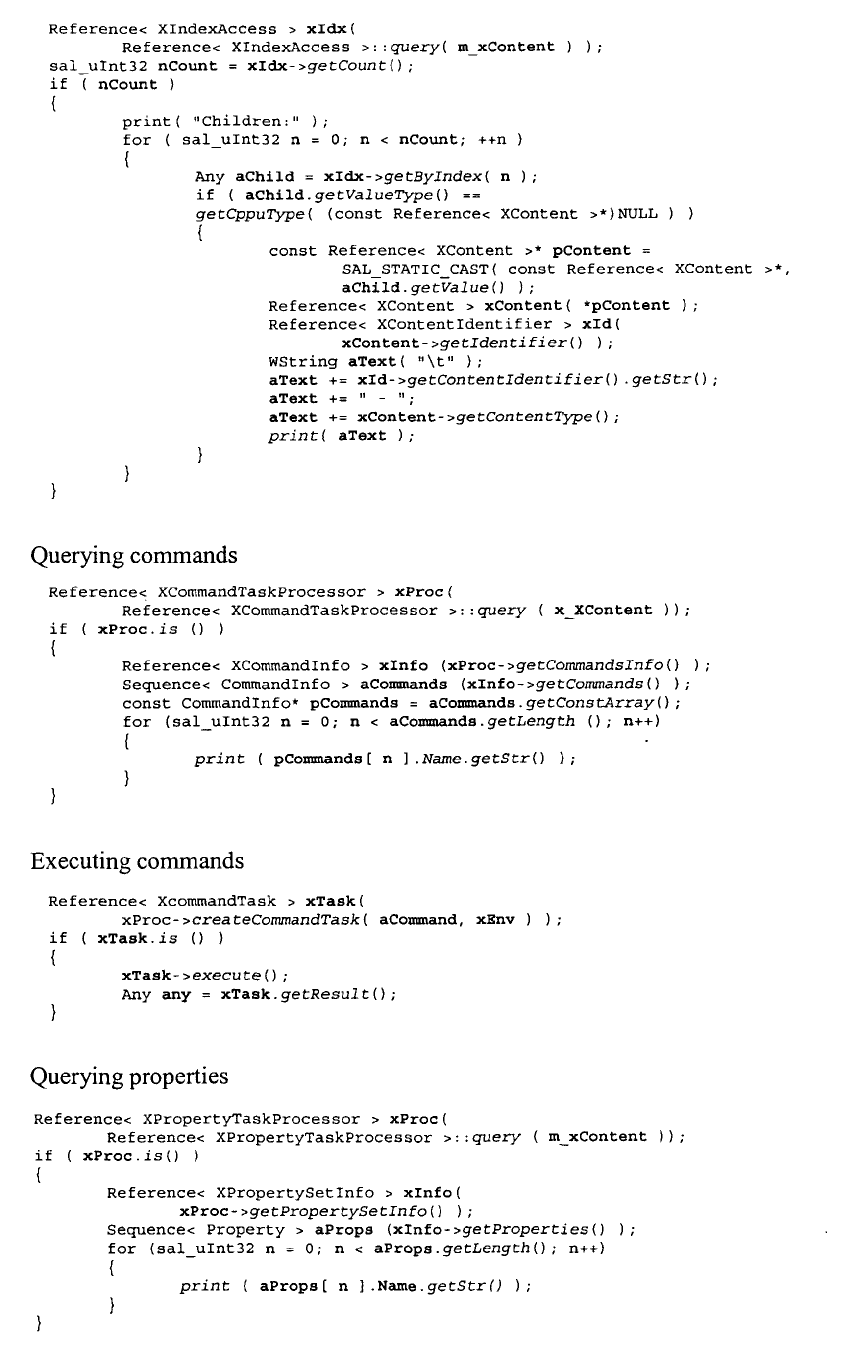

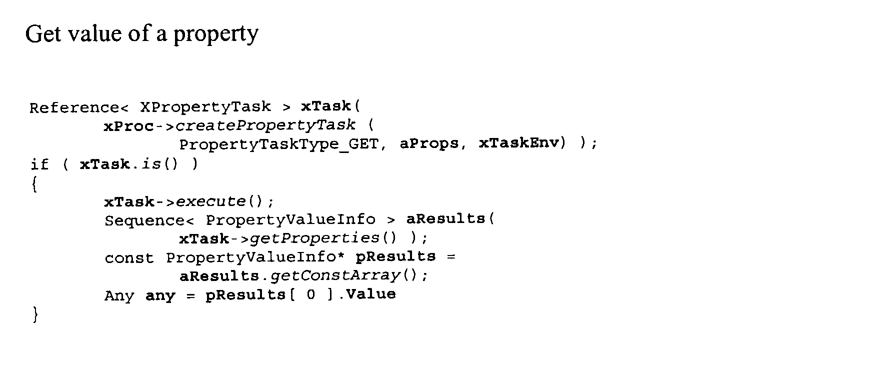

### Annex II

The present invention relates to a method and a system for the individual representation of data.

Information requested by a user device naturally needs to be in a format to be understood by this specific user device. Therefore, in many instances information is only accessible to a certain group of user devices. For example, homepages of individuals or companies provided by a webserver over the internet are generally available only to specific user devices, namely computer systems supporting the regular homepage data format html. However, the access of other user devices to this information may also be desirable. Such user devices may be, for example, handheld computers or mobile phones.

Therefore, the object of the present invention is to provide a method and a system allowing the access of data, particularly over a network, to a variety of different user devices, including mobile phones and handheld computers.

This object is achieved by the inventive method for presenting data on a user device with presentation requirements relating to the presentation of this data on the user device, comprising the following steps:
a) receiving a request from the user device for the data by data presentation management means,
b) identifying the presentation requirements of the user device to the data presentation management means,
c) selecting a presentation scheme for the data in accordance with the presentation requirements, so that the presentation scheme can be applied to the data to create presentable data to allow the presentation of the data on the user device.

Herein, the step c) may be carried out by the data presentation management means. The inventive method may also comprise the step d) of applying the presentation scheme to the data to create presentable data to allow the presentation of the data on the user device. This step d) may be carried out by the data presentation management means. However, step d) may also be carried out by the user device or by any other device which applies the presentation scheme and provides the presentable data to the user device.

The aforementioned method may be supplemented by the further step e) of transmitting the presentable data to the user device to allow the presentation of the data on the user device.

The data may be retrieved by the data presentation management means before the application of the selected presentation scheme to the data. In another embodiment of the present invention the data may be retrieved by the user device itself. Then, the selected presentation scheme may be applied by the user device or by the presentation management means. The latter would, for example, apply, if the data retrieved by the user device would be transferred to the presentation management means for applying the selected presentation scheme and than be retransferred to the user device.

In the scope of the present invention a method is also provided for obtaining data by a user device having presentation requirements relating to the presentation of the data on the user device, comprising the following steps:
a) submitting a request by the user device to data presentation management means for obtaining the data from the data presentation management means, the request causing the identification of the presentation requirements of the user device to the data presentation management means, the selection of a presentation scheme for the data in accordance with the presentation requirements of the user device by the data presentation management means, the request further causing the application of the selected presentation scheme to the data to create presentable data, and
b) receiving in the user device the presentable data to allow the presentation of the data by the user device.

Furthermore, a method is provided for obtaining data by a user device having presentation requirements relating to the presentation of the data on the user device, comprising the following steps:
a) submitting a request by the user device to data presentation management means for obtaining the data from the data presentation management means, the request causing the identification of the presentation requirements of the user device to the data presentation management means and the selection of a presentation scheme for the data in accordance with the presentation requirements of the user device by the data presentation management means,
b) receiving in the user device the selected presentation scheme for the data,
c) applying in the user device the selected presentation scheme on the data to create presentable data.

Herein, the user device may receive the data via data management presentation means, as described earlier.

Data in the scope of the present invention is the representation of information. This information can be presented by any suitable means, for example, text, picture, sound, movie or action. Different kinds of information can also be combined. This data may be accessible to the user device, for example, via a network. For the retrieving of the data certain requirements of the user device have to be considered. Such requirements may be of different type. They include presentation requirements. They may further have different origin. For example, the requirements may be caused by the software on the user device, which may support only specific kinds of information. It may also be possible that the requirements depend of the hardware of the user device, if the user device can, for example, present information merely via a loudspeaker. User depending requirements are also possible in the scope of the present invention. This may be caused by certain preferences of the user as well as by a handicap.

In the scope of the present invention data includes also functions. Such functions may be, for example, actions for presenting data, for example, movies and sound as well as function for processing on data like, for example, calculation functions or spellchecker.

A user device according to the present invention may be, for example, a computer system comprising at least a processor, a storage medium and an i-/o-interface. Via this i-/o-interface the user device may be connected to the source of the data. It will also be possible that the requested data is stored on the storage medium of the user device. Regularly, the user device comprises also input and output devices connected via the i-/o-interface.

The requested data may be retrieved via at least one portlet. In the context of the present invention a portlet is understood to be means for providing the requested data from a data source, for example, from a certain homepage or data base. Two or more portlets may be arranged in tree-like organization. This tree-like organization may be presented to a user of the user device, for example, on a screen of the user device, so that this user has the possibility to easily choose among the offered portlets.

The presentation requirements of the user device may be determined based on information about the user device. For example, if the data presentation management means are informed about the type of the user device they may conclude therefrom the presentation requirements of the user device.

In the context of the present invention data presentation management means are hardware or - generally - software means for managing the presentation of data on a user device. Their exact functionality depends on the implementation of the present invention. The functionality of the data presentation management means includes at least the selection of the presentation scheme for the requested data in accordance with the presentation requirements of the user device. For this purpose the data presentation management means must be informed about the presentation requirements of the user device. Furthermore, the functionalities of the data presentation management means may include the application of the selected presentation scheme on the requested data in order to create presentable data to be presented by the user device. This requires the availability of the requested data for the data presentation management means. The retrieval of this data may also be carried out by the data presentation management means.

The presentation schemes may be defined, for example, in an extensible stylesheet language (XSL). XSL is a language for creating a stylesheet which describes how content being formatted in an extensible markup language (XML) will be presented to a user device. The presentation scheme may describe, for example, if a certain content defined in XML will be displayed, where this content will be displayed and how it will be displayed.

The methods of the present invention may be implemented in a computer program (computer program product), including comprehensive office applications. A computer program product comprises a medium configured to store or transport computer readable code, or in which computer readable code may be embedded. Some examples of computer program products are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. Therefore, the present invention also relates to a data carrier for storing a computer program for carrying out the inventive methods. The present invention also relates to a method for using a standard computer system for carrying out the present inventive methods.

In the scope of the present invention a computer system is provided comprising at least a processor, a memory and an i-/o-interface for representing data depending on presentation requirements of a user device relating to the presentation of the data on the user device, comprising data presentation management means, wherein the data presentation management means include:
a) at least one receiving module for receiving a request of the user device for the data,
b) at least one identifying module for identifying the presentation requirements of the user device, and
c) at least one selecting module for selecting a presentation scheme for the data in accordance with the presentation requirements.

Furthermore, the computer system may comprise
d) at least one retrieving module for retrieving the data, and
e) at least one applying module for applying the selected presentation scheme to the data to create presentable data which may be presented by the user device.

The retrieving and the applying functions may also be carried out in a user device or in a computer system being accessible to the user device. Therefore, the retrieving module and the applying module may also be located in the user device or in any computer system which is connectable or conntected to the user device and which is able to deliver the result of the application of the presentation scheme, the presentable data, to the user device.

The aforementioned computer system may be supplemented by a transmitting module e) for transmitting the presentable data to the user device to allow the presentation of the requested data on the user device.

The present invention will now be described exemplary along the following figures, which show:
- Fig. 1:: schematic representation of an example for the method and system of the present invention
- Fig. 2:: schematic representation of the screen print of a user device using the present invention
- Fig. 3:: flow chart showing obtaining the presentation requirements of a user device
- Fig. 4:: flow chart showing the steps to be carried out by a method according to the present invention
- Fig. 5:: flow chart showing the operation of a method of the present invention
- Fig. 6:: schematic representation of the portlet manager

Fig. 1 shows an example of a system and method according to the present invention. A user device like a mobile phone la or a laptop computer 1b may want to access certain data via the network 2. This network 2 may be the Internet or any other permanent or temporary network, for example a local area network. Other user devices are suitable as well in the scope of the present invention. Examples include any kind of computer systems, like servers and personal computers, and any devices which are able to process data and to communicate with other devices for exchanging data. In this context computer systems may include at least a processor, a storage medium and an i-/o-interface. In the context of the present invention data refers to any type of information which is arranged in certain order to be accessible by a computer system. The data to be accessed may also include one or more functions or functionalities provided to the user of a user device. Functions are, in this context, possibilities given to the user device to initiate any actions beyond the mere retrieval or display of information, for example, a search in the internet for a certain publication or the initialization of a software program on a remote server carrying out some operations in response to the user device's request.

If the user device la or 1b wants to access certain data via the network 2, it will send a request for said data, for example, for a certain homepage, to a webserver 3. The webserver 3 comprises a processor, a memory and an i-/o-interface. In particular, the webserver 3 includes means for receiving this request. The request may specify the data requested from the mobile phone la or the laptop 1b by giving suitable address data as to where this data can be found, for example, the Internet address of a homepage (URL).

This request will be forwarded to data presentation management means, in the following exemplary referred to as portlet manager 4. This portlet manager 4 may be implemented in software within the webserver 3 or may be installed on a separate computer system which is connected or connectable to the webserver 3. Having received the request for data from the webserver 3 the portlet manager 4 identifies the presentation requirements of the user device having sent the request for the data with respect to the presentation of the data to this user device. For this purpose the user device has means for identifying these requirements. These presentation requirements may be any conditions or limitations for the presentation of data on the user device, for example, kind and size of display for data on the user device, type of programming language or data format supported by the user device, or any other presentation requirements of the user device, for example, of the processor or the memory. These presentation requirements may not only result from technical necessities, but also from an individual user's demands or wishes. The presentation requirements of the specific user device are identified by the respective means either by being provided the information about the presentation requirements directly from the user device, together with the request for the data or separately, or by being provided information about the type of the user device and by procuring the needed information about the presentation requirements of the so identified user device from a data base, which may or may not be an integral part of the portlet manager, and which connects information about the type of the user device with the desired information about the specific presentation requirements of the user device with respect to the presentation of the requested data.

In order for the data to comply with the identified requirements the portlet manager 4 loads all configuration information needed for presenting the requested data to the user device la or 1b, respectively. Configuration information is all information about the layout and the presentation of the requested data. It must correspond to the identified requirements. The totality of the configuration information needed to present data to a certain user device is referred to as a presentation scheme. This is selected according to the presentation requirements of a certain user device by the data presentation management means, i.e. the portlet manager 4. For this purpose, XSL-stylesheets, which may be stored in storage medium 5 may be selected according to the identified requirements by means 7 for presenting data in accordance with the identified presentation requirements of the user device 1a. These means 7 are generally implemented in software. They may, for example, have access to a further external storage medium 8 on which, for example, XSL-stylesheets may be stored. The configuration data loaded in response to the user device's request may be stored in a specific file until the data to which it shall be applied has been provided.

The portlet manager 4 now retrieves the requested data. The data is procured via the webserver 3 from portlets 9, 10, ... . Portlets 9, 10, ... represent ways for accessing the requested data. This data may have different format. For example, text based information may be provided in the HTML format as well as in the WML format. The portlets 9, 10, ... have means for accessing data, including software modules, to retrieve the requested data for the portlet manager 4 from any accessible location, including internet homepages, data bases and other storage media.

In the portlet manager 4 the means 7 will then apply the presentation scheme loaded from storage media 5, 6 and 8 to the data. This presentation scheme will be applied to the data. Herewith, the data which was requested by the user device 1a or 1b, respectively, is converted to presentable data which may be presented in accordance with the requirements of the user device 1a or 1b, respectively.

Finally, the data may be transferred to the user device la, 1b which requested it in the presentation required by this user device 1a, 1b. Herewith, the user device 1a, 1b may access the requested data in proper form.

Fig. 2 gives an example of a user's view on the present invention by showing a print-out of a screen 20 of a user device, here a laptop, utilizing a method according to the present invention. Screen 20 shows symbols 21, 22, 23, ..., each standing for one portlet - 9, 10, ... in Fig. 1. The symbols 21, 22, 23, ... offered on the screen 20 and the portlets associated therewith can be freely chosen by a user of the user device.

However, a portlet is only selected for display on screen 20, that means the user can only choose it, if its data may be presented by the user device. For example, if the user device does not support graphics, a portlet which defines the MIME type image/jpeg will not be selected for display on the screen 20, that means it will not be offered to the user of the user device. This pre-selection of portlets to be offered to the user is made by a comparison of the requirements of the user device and of the MIME type of data defined by each of the portlets. In the above example relating to graphics the presentation requirements of the user device, the laptop, regarding the presentation of data will not allow to support graphics. The comparison with the MIME type of data defined by the various portlets will show that a portlet defining image/jpeg as its MIME type of data cannot be supported by this user device. Therefore, it will not be displayed on the screen 20. This comparison may be made at any suitable location, for example, in the user device as well as in the webserver, in the portlet manager or in the respective portlet itself.

Instead of the screen print-out given in Fig. 2 the portlets may also be offered to the user of the user device in the form of a text based listing. This listing may be put together in the portlet manager, for example, in the XML format. The information required for this listing, namely which portlet defines which mime type of data, may be retrieved via the webserver from the various portlets.

Fig. 3 shows in a flow chart one possible way to fulfill the presentation requirements of the user device la or 1b, respectively. In a first step 31 the user device 1a, 1b sends a request to the portlet manager 4 via the webserver 3. This request either contains information about the presentation requirements of the requesting user device la, 1b or it contains information about the identity of the user device 1a, 1b. It further includes a description of the requested data. Such a description may be, for example, the URL of the data, if the requested data can be found on a homepage on the Internet. The portlet manager 4 will contact in step 32 the corresponding portlet for retrieving this data. If the requested data is only available from several different portlets, those would be contacted in this step. In a next step 33 the portlet manager 4 retrieves the data from the one or more portlets. In order to consider the presentation requirements of the user device 1 the portlet manager 4 needs information about these requirements. In one embodiment of the present invention the portlet manager 4 extracts from the request in a further step 34 a list of MIME types supported by the user device la, 1b. In another embodiment the portlet manager 4 may have a list of the presentation requirements of different user devices 1a, 1b. In this case, the portlet manager 4 may analyze the identity of the user device 1a, 1b in step 35 and then contact this list in step 36 in order to obtain the information about the requirements of the user device 1a, 1b.

Fig. 4 shows a flow chart representing a method according to the present invention for presenting data on a user device with certain data presentation requirements. In a first step 41 the data presentation management means, i.e. the portlet manager 4 receives a request for data from a user device 1a, 1b. In the next step 42 the portlet manager 4 identifies from this request the presentation requirements of the user device 1a, 1b, as it was above described in relation to Fig. 3. In step 43 a presentation scheme is selected for the requested data in accordance with the identified presentation requirements. This enables the user device 1a, 1b or the portlet manager 4 or another computer system which is able to be connected to the user device 1a, 1b or to the portlet manager 4 to apply the selected presentation scheme to the data delivered by the portlets in order to arrive at presentable data which may be presented to the user device 1a, 1b.

Fig. 5 presents an exemplary embodiment of the method of the present invention. In this example, a setup as presented in and described in connection with Fig. 1 is used. Therefore, reference numerals below 50 refer to devices shown in Fig. 1.

In step 50 the user device, for example, a mobile phone 1a sends a request for data via the network 2 to the webserver 3. The mobile phone 1a uses the wireless application protocol (WAP) as MIME type for data which it handles and processes. A browser may run on the mobile phone 1a. The requested data may be, in this example, a certain homepage which is available on the Internet at a certain URL. This homepage is programmed, for the purposes of this example, in an extensible markup language (XML). The request of the mobile phone la includes at least the URL of the requested homepage and the MIME type supported by the mobile phone la, i.e. WAP. In this example, the identity of the user device la, 1b and its user is transmitted together with or as a part of the request. The request also includes a command, for example, "channel", if the content of the requested URL shall be loaded onto the user device.

In step 51 this request of the mobile phone 1a is analyzed by the webserver 3 in order to decide whether this request has to be processed by the portlet manager 4. The alternative is to provide the data directly by the webserver 3. This decision - made in step 52 - is based on the MIME type used for the requested homepage and the MIME type supported by the mobile phone la.

If the above question would be answered with "NO", then the requested data will be directly provided by the webserver 3 to the mobile phone la in step 53. This would require that the MIME type of the requested data and the MIME type supported by the mobile phone la are identical or at least compatible. This condition will frequently be fulfilled, for example, if a browser - which is able to handle and process data in XML - requests a homepage - which is also formated in XML.

If the answer to the above question is "YES", the request is forwarded by the webserver 3 to the portlet manager 4 in step 54. The portlet manager 4 may be a servlet. A servlet is an extension to a webserver which provides the webserver with information and logic. If a request for a certain URL, for example, is forwarded to the portlet manager 4, the portlet manager 4 is started. This leads to the portlet manager 4 processing the request. This processing includes doPost requests as well as doGet requests as it is shown in Table 1. In order to simplify the further communication the portlet manager 4 employs the URL mentioned in the request forwarded by the webserver 3 for identifying itself and saves this address in a string. The portlet manager 4 identifies also the requested command. In one embodiment of the present invention there are supported at least the following commands. The "load" command loads information about the requested data. With the "save" command the user device submits settings made by the user device 1a in order to save these settings along with the user data. In order to provide the content of a portlet to a user device the "channel" command is submitted. Since the user device 1a requests in this example data from a portlet the "channel" command will be submitted by the mobile phone 1a. The functionality of the portlet manager 4, especially certain commands, is described in detail in the code shown in Table 1.

In step 55 the identity of the user device la and of the user employing the user device la is retrieved from the request. Then, in step 56, the portlet manager 4 will access an internal or external storage medium, for example, data base 8 in order to check whether for the identified user device 1a and for the identified user a presentation scheme or parts of a presentation scheme are already stored. For example, a certain user may request a specific character type (font) for the data to be presented on the display of his mobile phone la, or a certain mobile phone la may request a specific character size (font size) in view of its specific display.

If "NO", that means the storage medium does not have any information about a presentation scheme or a part of a presentation scheme assigned to the specific user or the specific requesting user device 1a, the portlet manager 4 may search in step 57 in the network 2 for such individual presentation schemes or parts thereof. For example, if the network 2 is the Internet the portlet manager 4 may contact the homepage of the producer or distributor of the mobile phone la in order to find the desired information there. If the search of the portlet manager 4 is successful, the presentation scheme or part of a presentation scheme will be retrieved in step 58. If the search is not successful, a default presentation scheme will be provided for later application to the requested data in step 59.

If "YES", that means the storage medium has information about a presentation scheme or a part of a presentation scheme assigned to the specific user or the specific requesting user device 1a, the portlet manager 4 loads this presentation scheme or part thereof in step 60.

In step 61, based on the presentation scheme or part thereof retrieved and based on the request of the user device la the portlet manager 4 requests from one or more portlets 9, 10, ... the delivery of the requested data, here the homepage with the URL specified in the request of the user device 1a. This request includes a list of all MIME types which are either supported by the user device la or which may be converted by the portlet manager 4 into a MIME type which is supported by the user device 1a. Other additional information like, for example, the type of the browser used by the user device 1a may also be included in the request to the portlet. In step 61 the portlet manager 4 asks the portlets 9, 10 ... whether they are able to deliver the requested data in a MIME type listed in the request. In order to submit the request it may be necessary to create a connection to the portlet.
If "NO", that means if the data cannot be delivered by the portlets 9, 10, ... in a MIME type which is supported by the user device 1a or which can be converted by the portlet manager 4 into a MIME type supported by the user device 1a, an error message is created in step 62, which is sent to the mobile phone 1a in order to report that the request for data sent in step 50 to the webserver 3 cannot be fulfilled.

If "YES", that means if the data can be delivered by the portlets 9, 10, ... in a MIME type which is supported by the user device 1a or which can be converted by the portlet manager 4 into a MIME type supported by the user device 1a, the data are received by the portlet manager 4 in step 63. In step 64 the MIME type of the received data is analyzed as to whether the user device 1a supports it or conversion by the portlet manager 4 is necessary.

If no conversion is necessary, the requested data are transferred to the user device 1a directly via the webserver 3 and the network 2 in step 65. If, however, conversion is required, what will be the case in our example where the homepage is in XML and the mobile phone 1a supports only WAP, the retrieved data will be analyzed in step 66 as to whether it is present in an extended markup language (XML).

If "NO", that means if the requested data is not in XML, the data will be converted in step 67 into the requested MIME type to arrive at presentable data by applying the corresponding presentation scheme, which includes conversion modules for the conversion of data between the respective MIME types. If, for example, the requested data would be supplied in HTML, this data would be converted from HTML to WAP in step 67. Subsequently, the created presentable data is sent to the user device 1a in step 65.

If "YES", that means the data is in XML - like in the here chosen example - the portlet manager 4 will select the suitable presentation scheme. For XML data this presentation scheme may include a XSL stylesheet. If a user device specific presentation scheme is accessible, the portlet manager 4 will choose this.

The requested data will then be subjected in step 68 to the application of the presentation scheme, in this example, to the selected XSL stylesheet. The presentation scheme may be retrieved by portlet manager 4 from storage medium 5. Herewith, the presentation scheme - here: the XSL stylesheet - is applied to the data so that presentable data is created. This presentable data may be sent to the user device 1a in step 65.

Fig. 6 shows an example of a portlet manager 4 according to the present invention. The portlet manager 4 comprises in this example six modules. Module A is a receiving module for receiving a request of the user device la, 1b. Module B is an identifying module for identifying the presentation requirements of the user device la, 1b. These two modules are able to communicate with the selecting module C in order to enable module C to select a presentation scheme for the requested data in accordance with the presentation requirements of the user device 1a, 1b.

In the present example, the portlet manager 4 comprises also a retrieving module D for retrieving the requested data to the portlet manager 4. The applying module E will then apply the presentation scheme selected in module C to the data to create presentable data which may be presented by the user device. This presentable data will be submitted by a transmitting module E to the user device. The modules D, E and F need not be part of the portlet manager 4. They or some of them may also reside on the user device la, 1b or on a computer system connected to the user device la, 1b or to the portlet manager 4.

It will be understood that the present invention is not limited to the examples given and explained in detail.

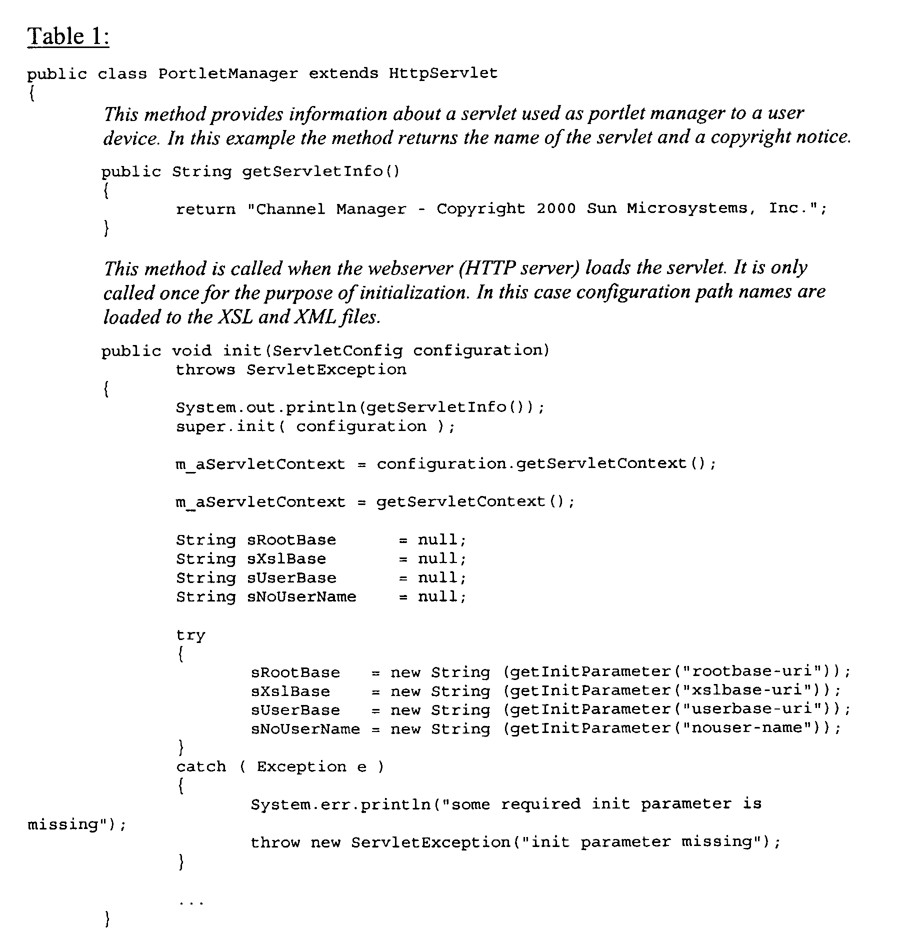

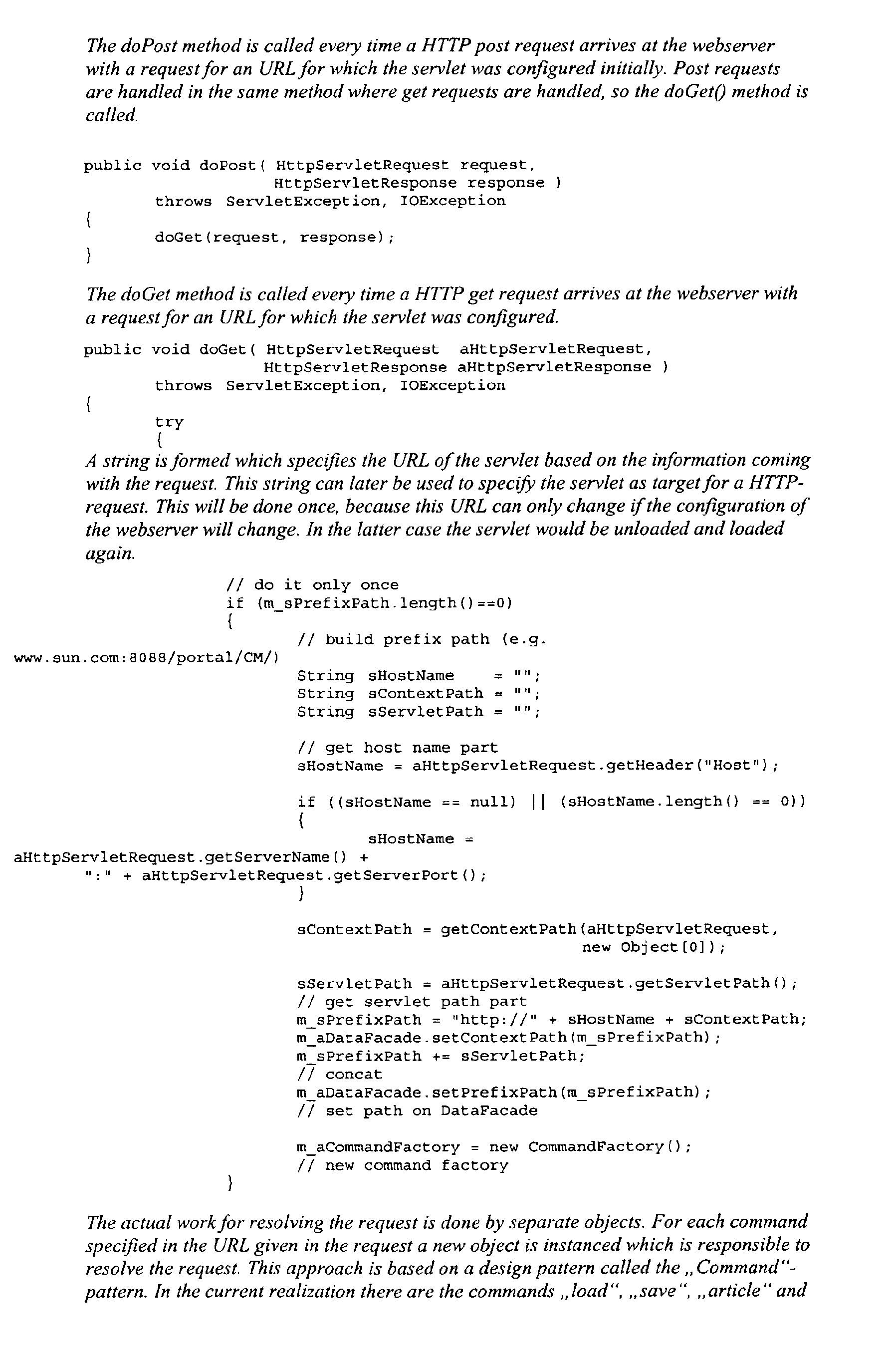

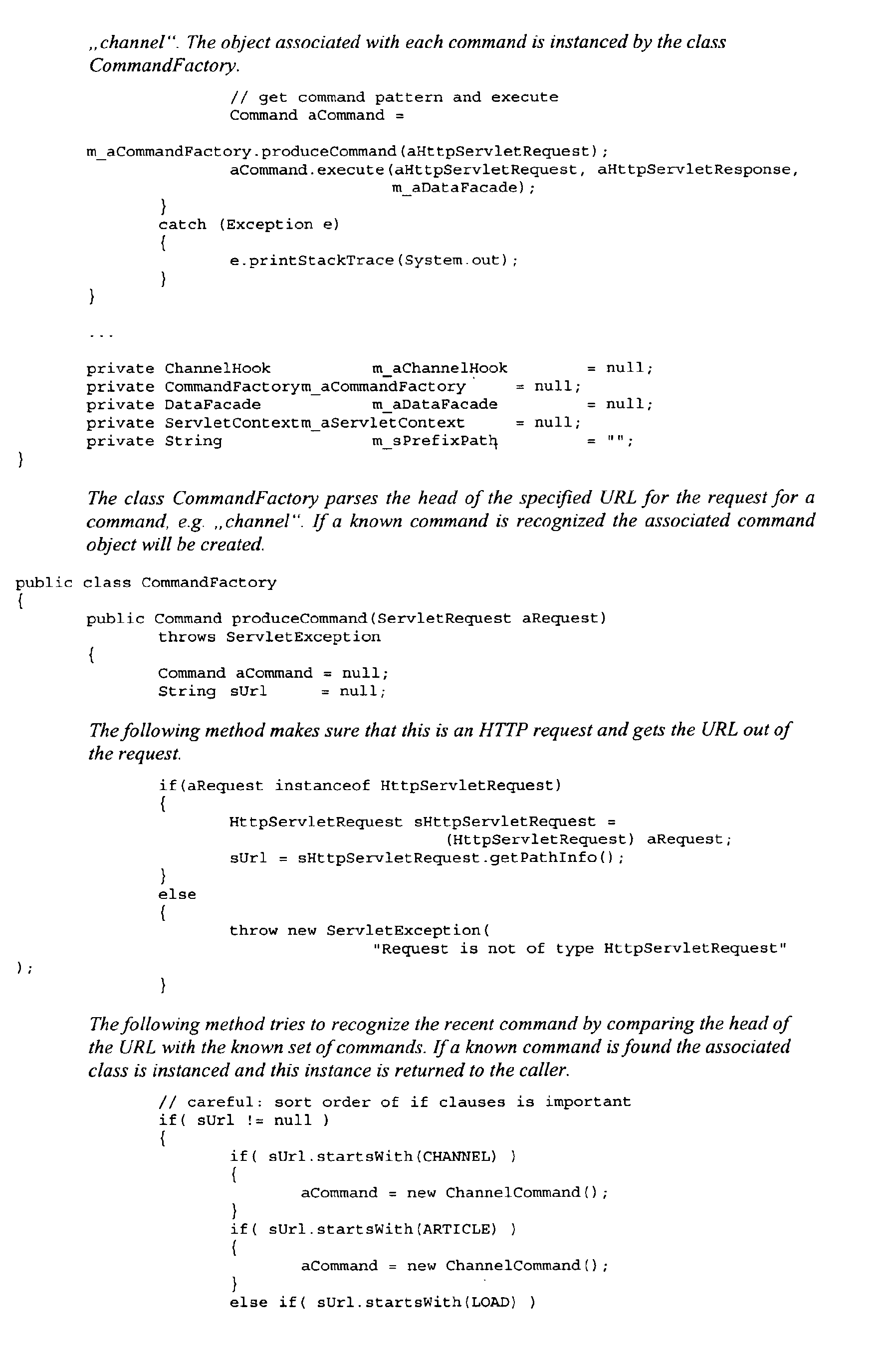

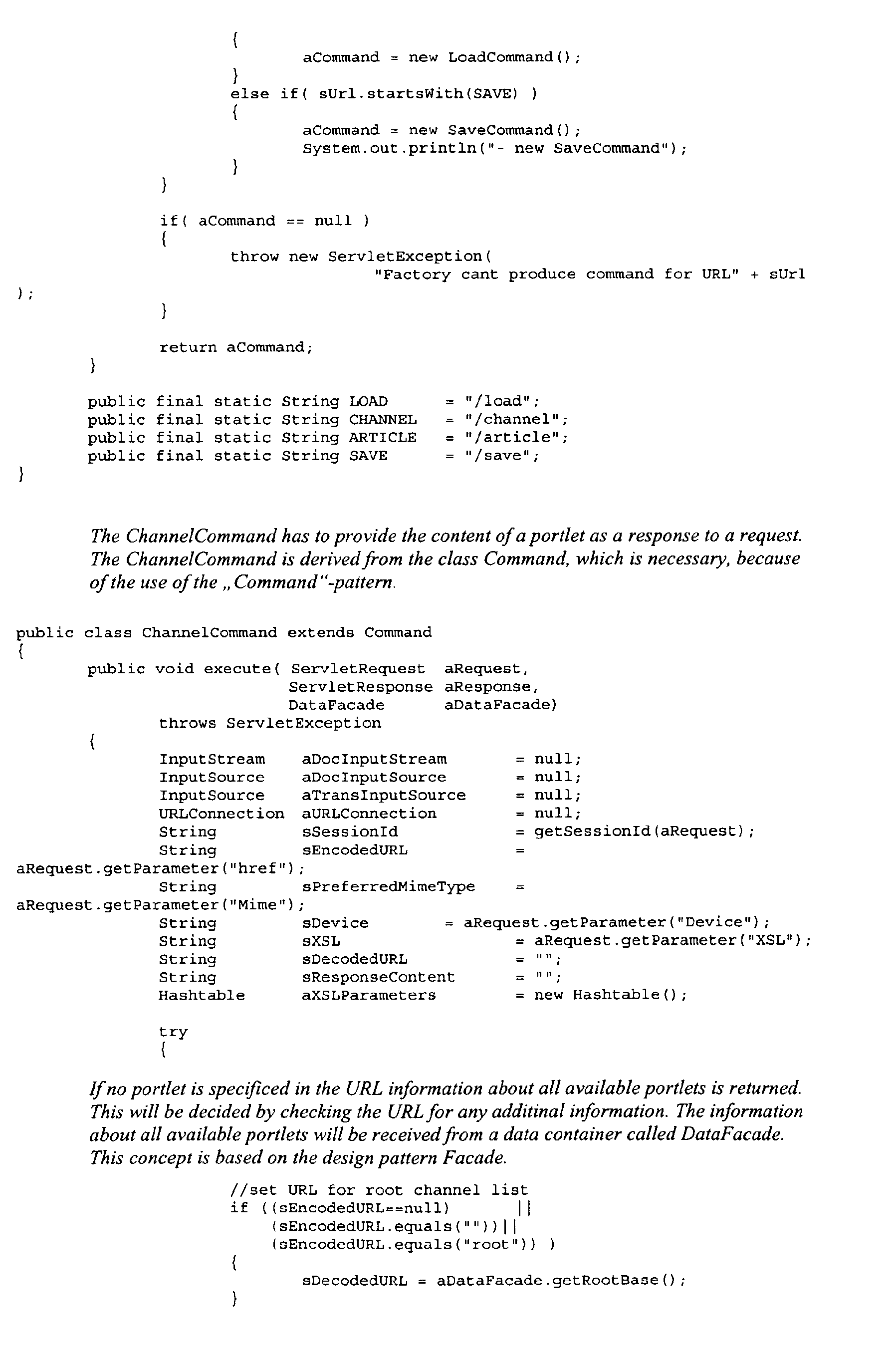

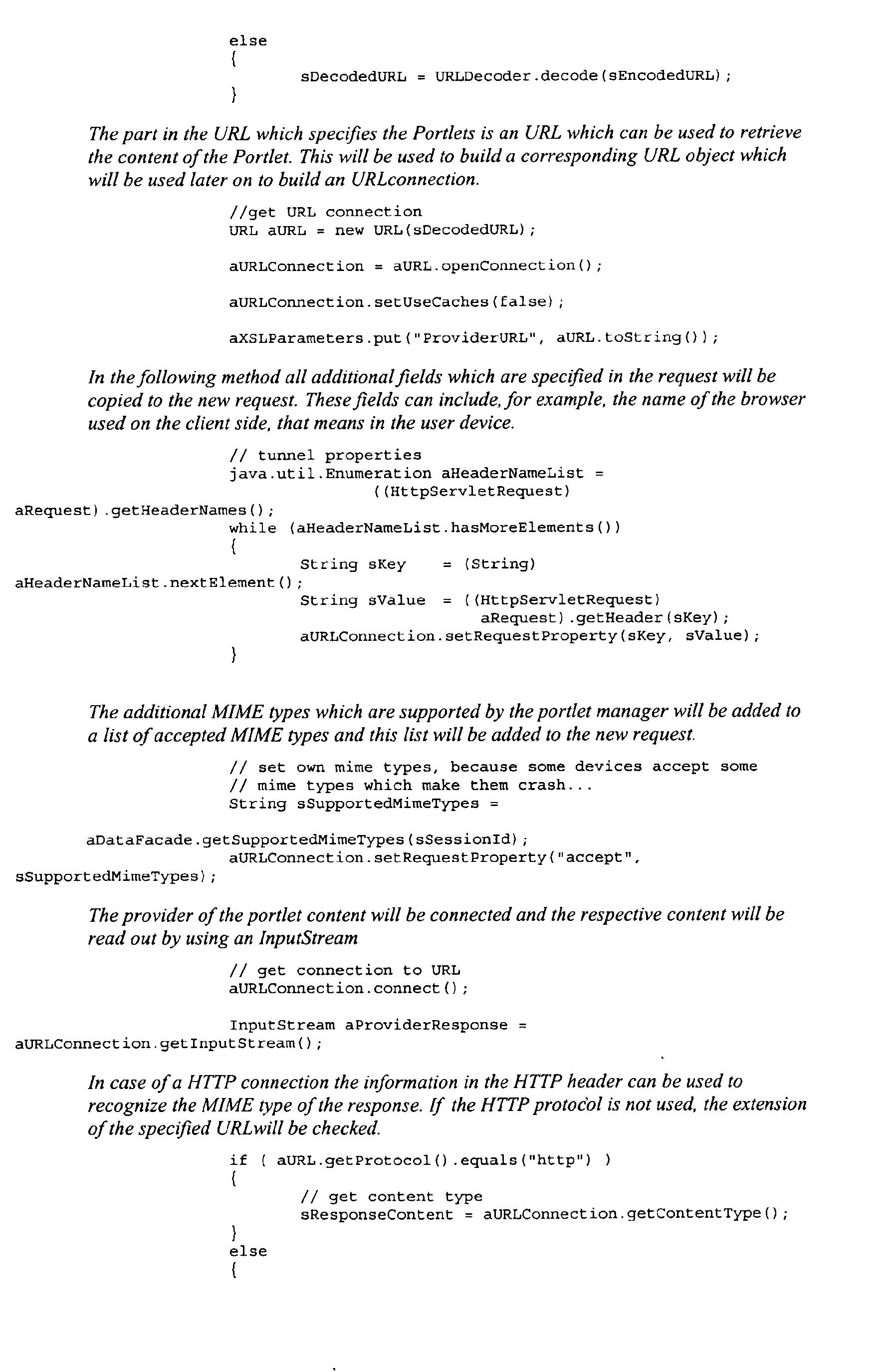

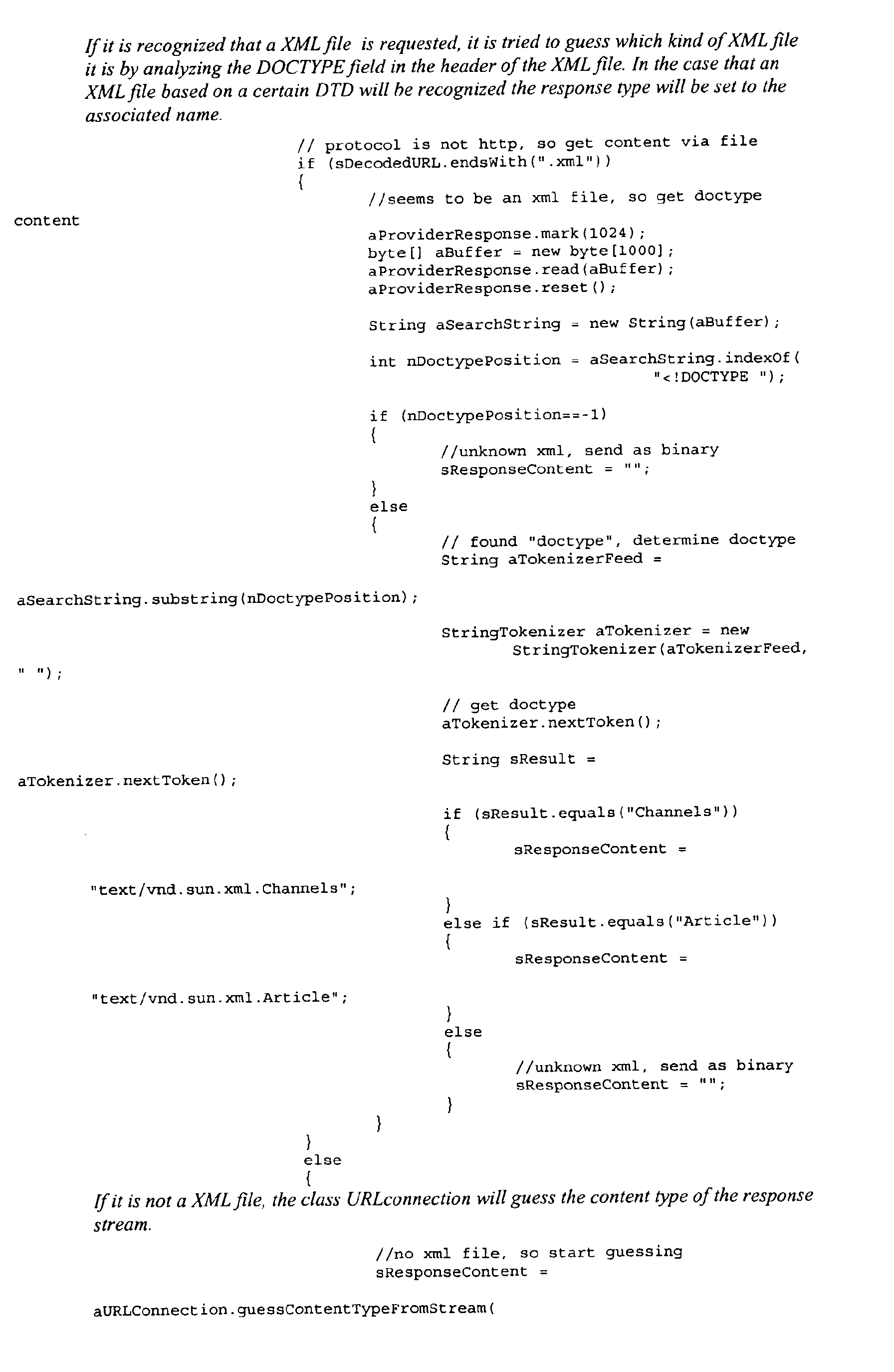

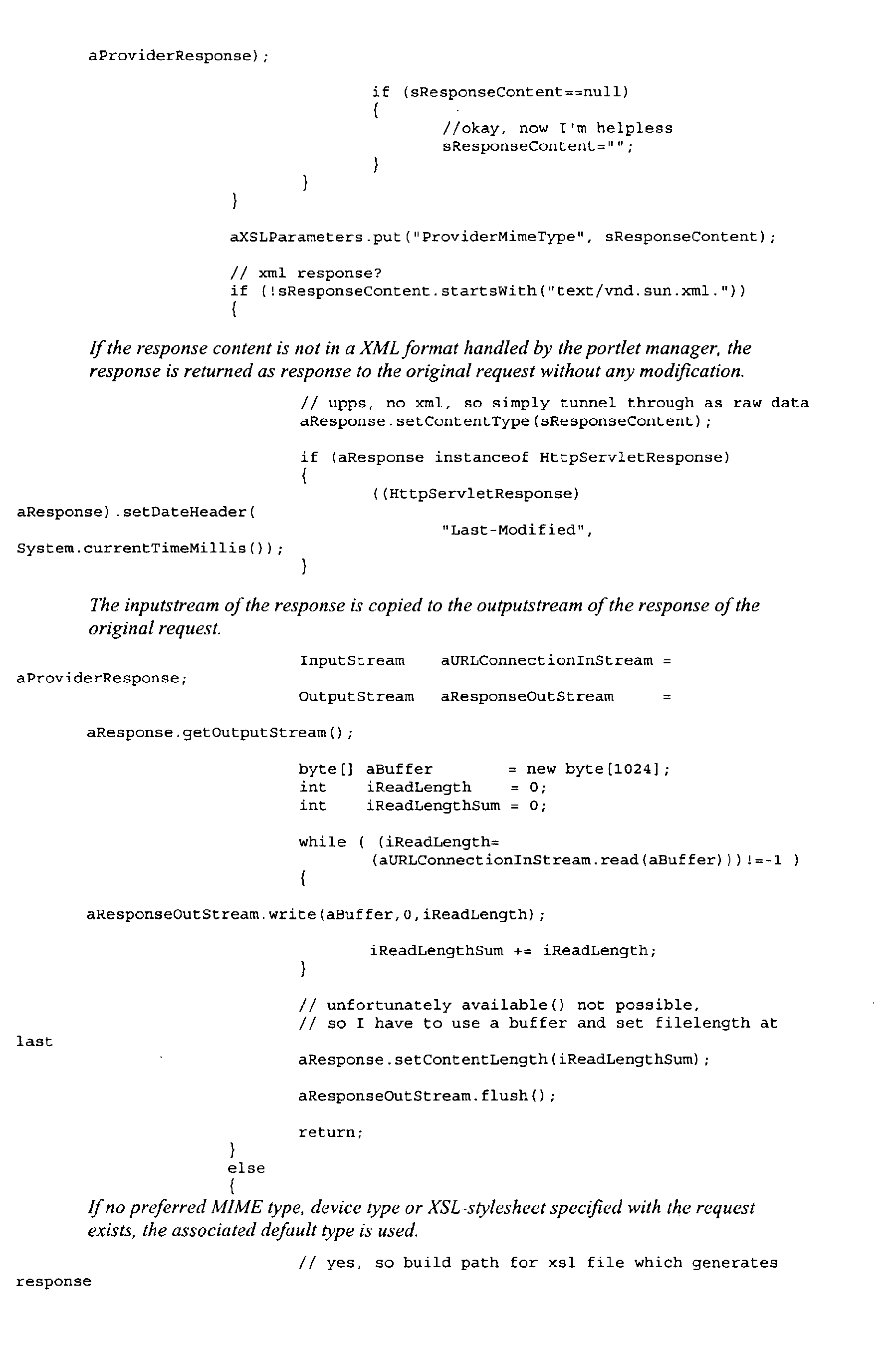

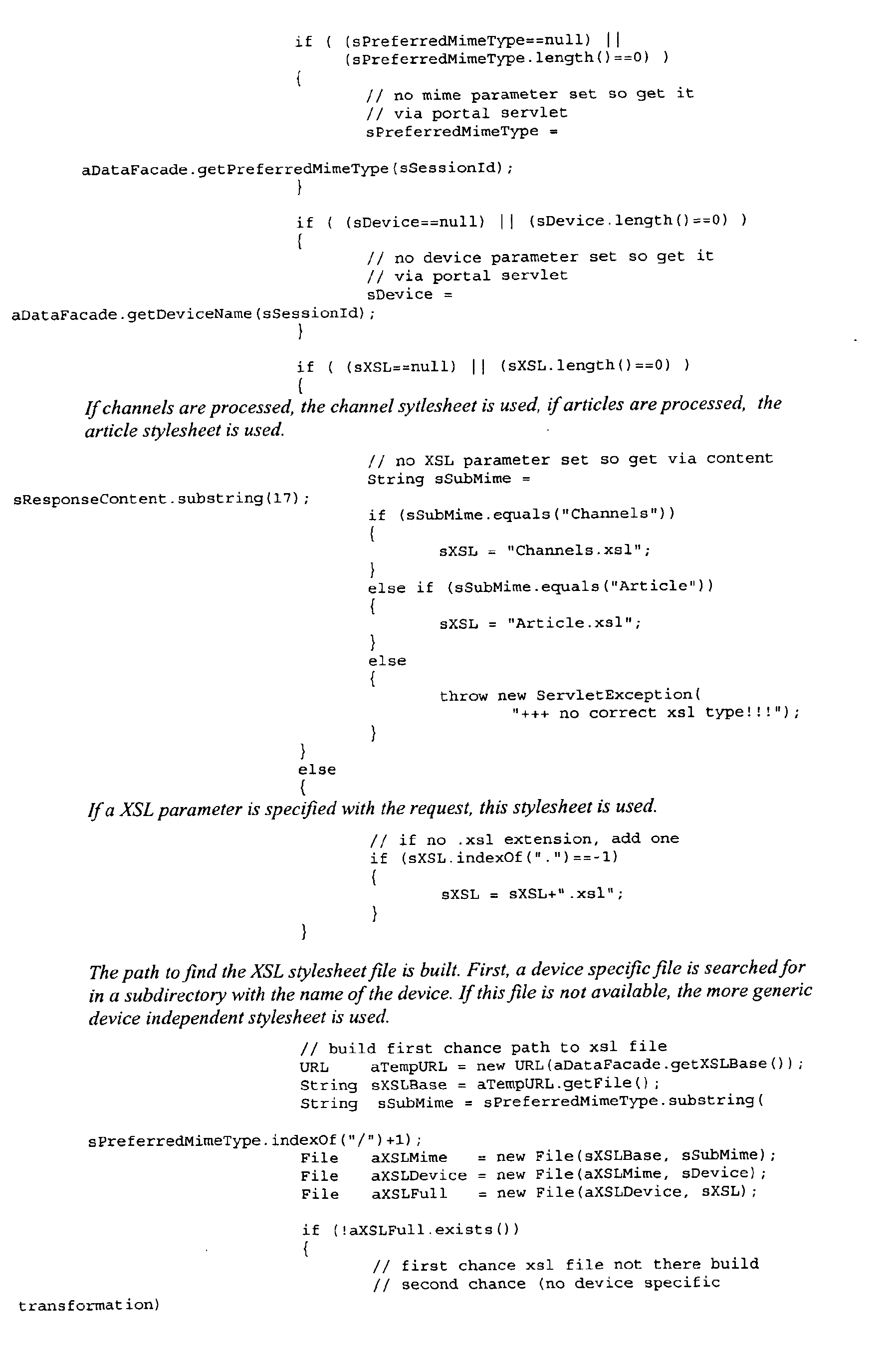

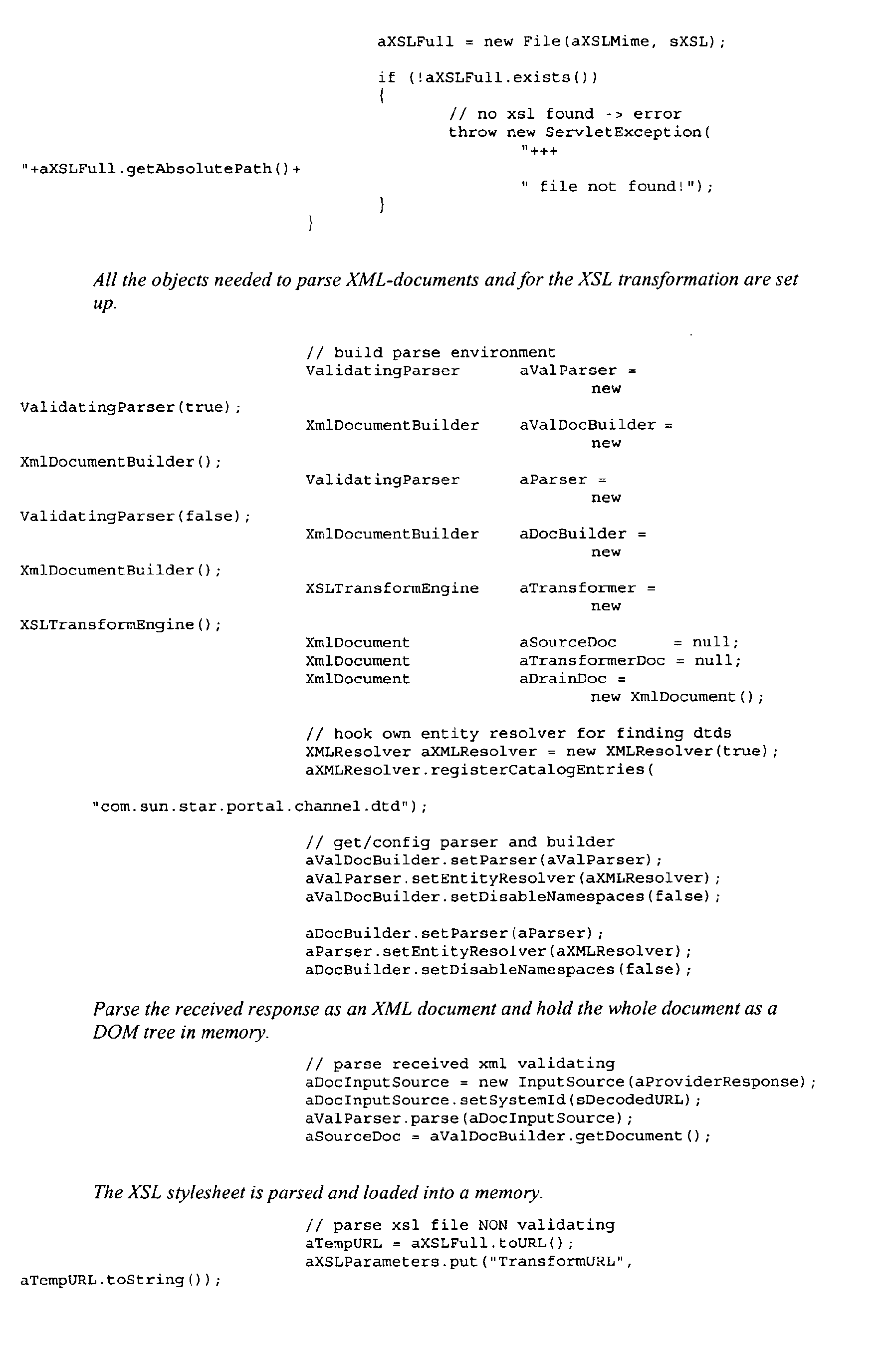

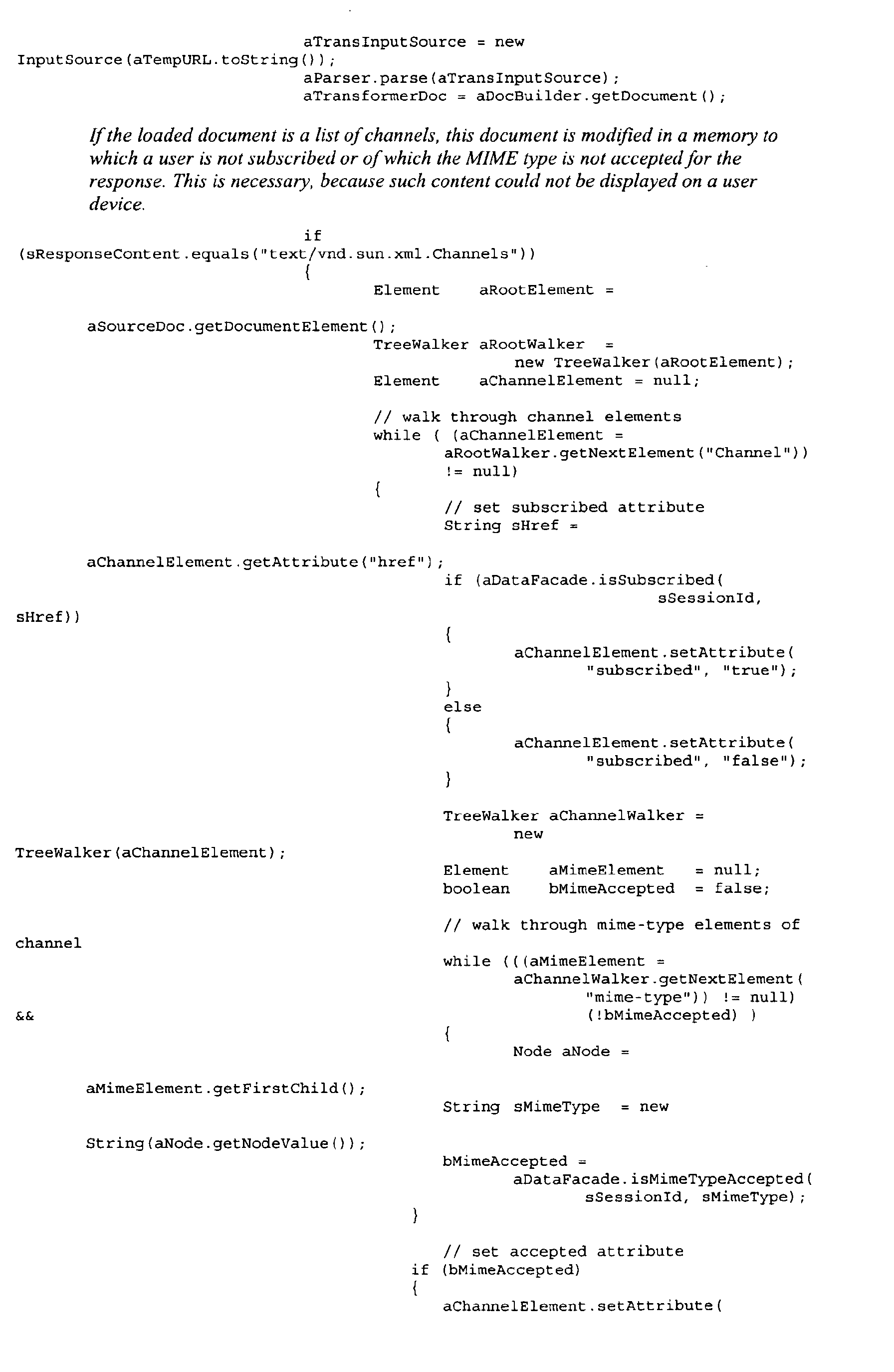

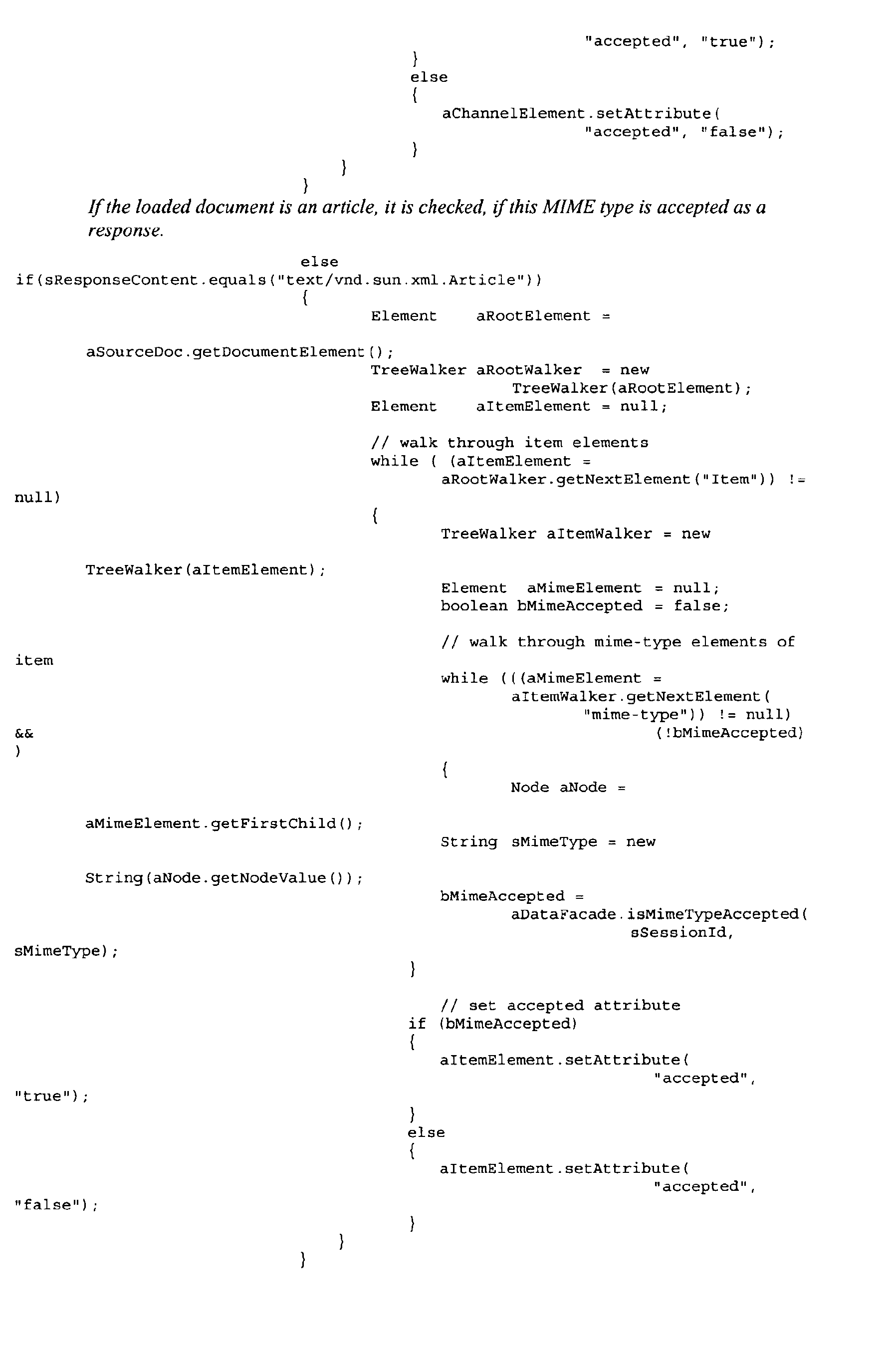

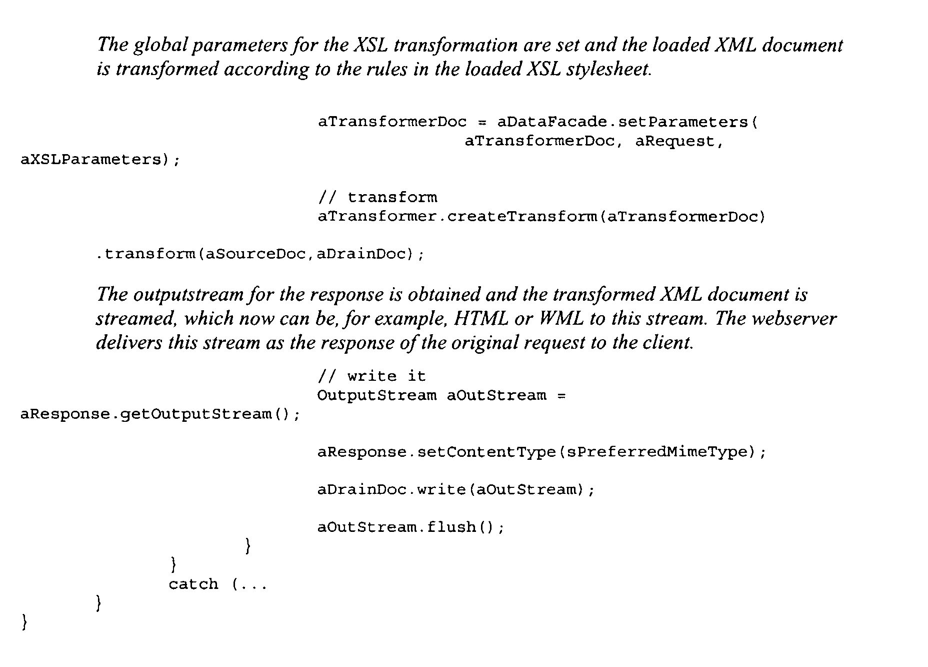

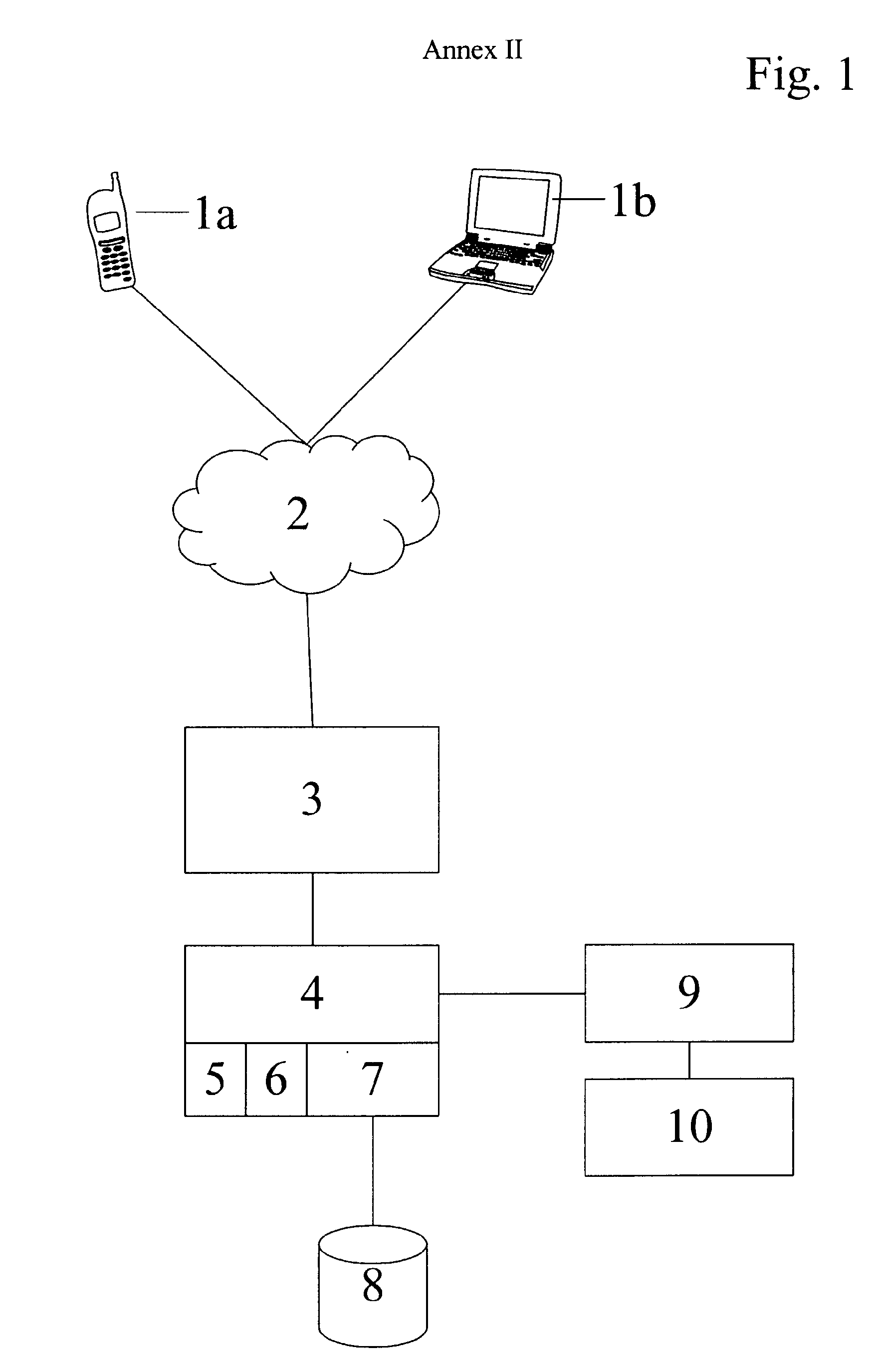

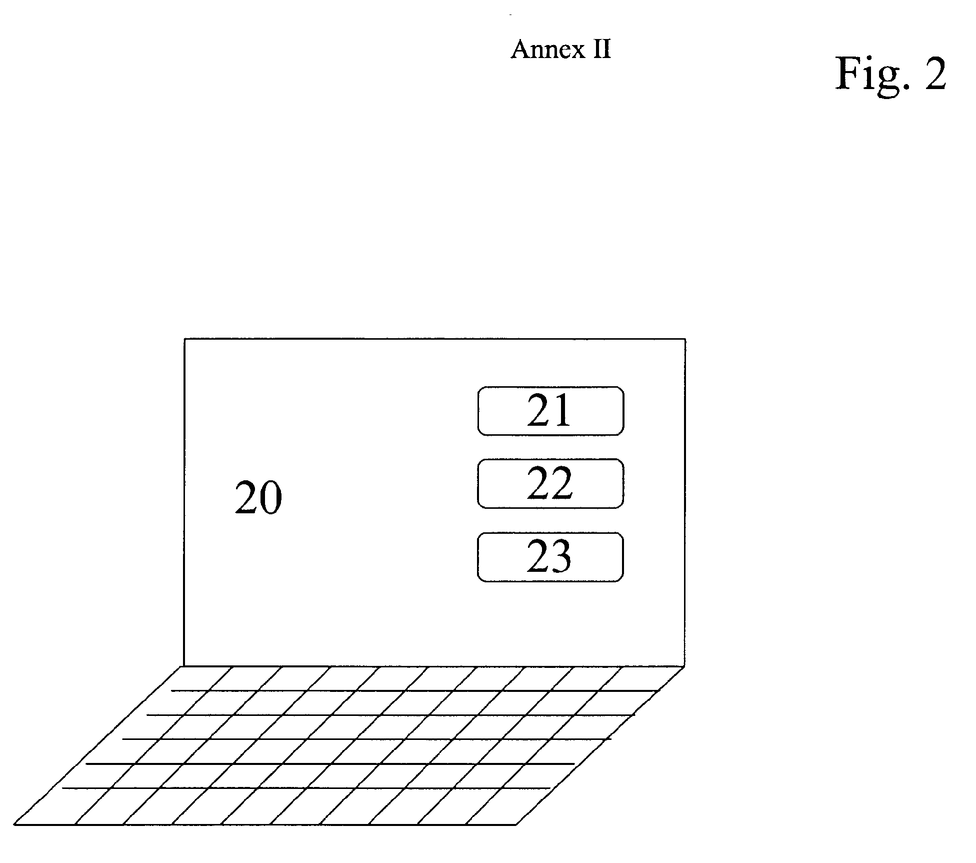

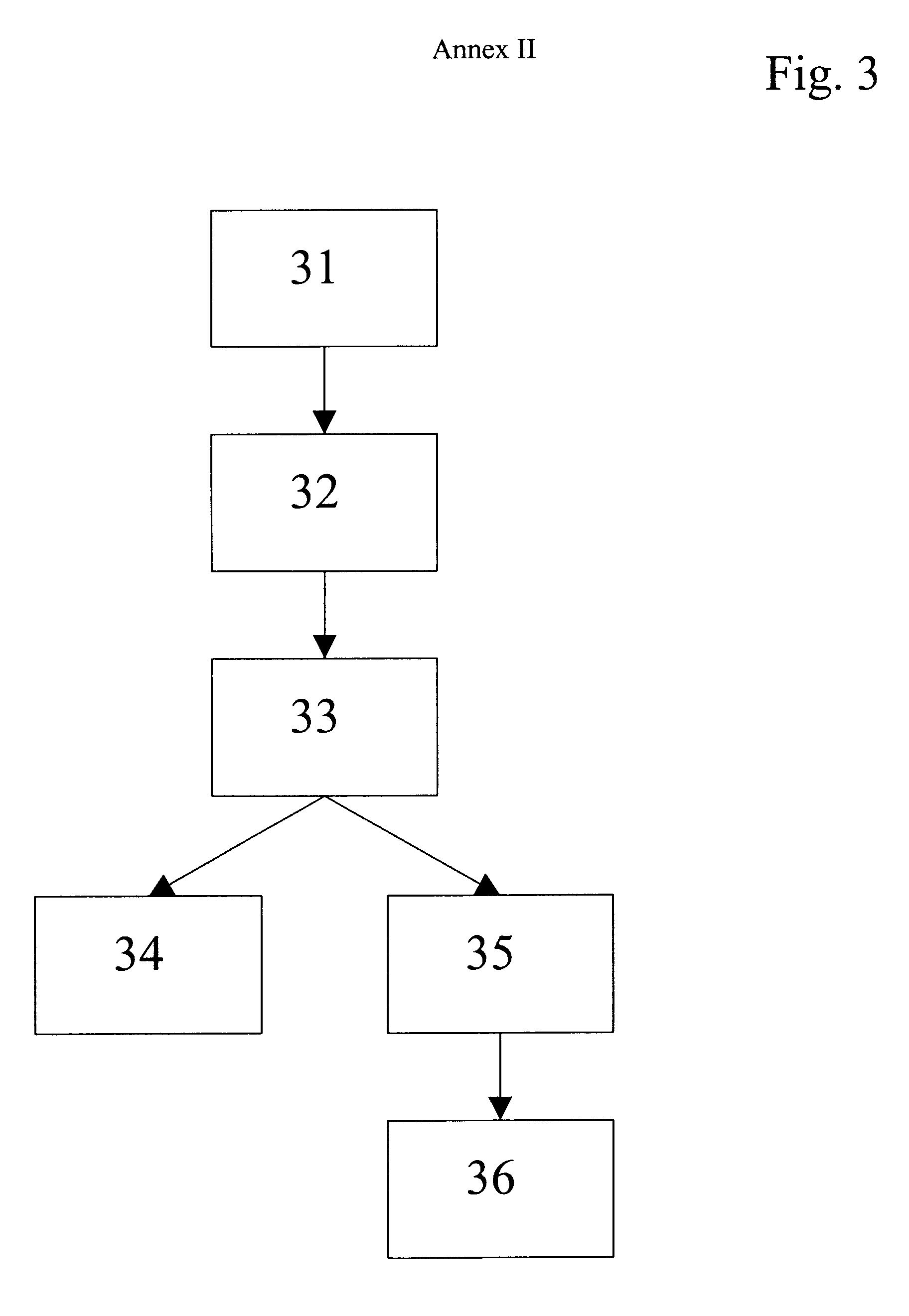

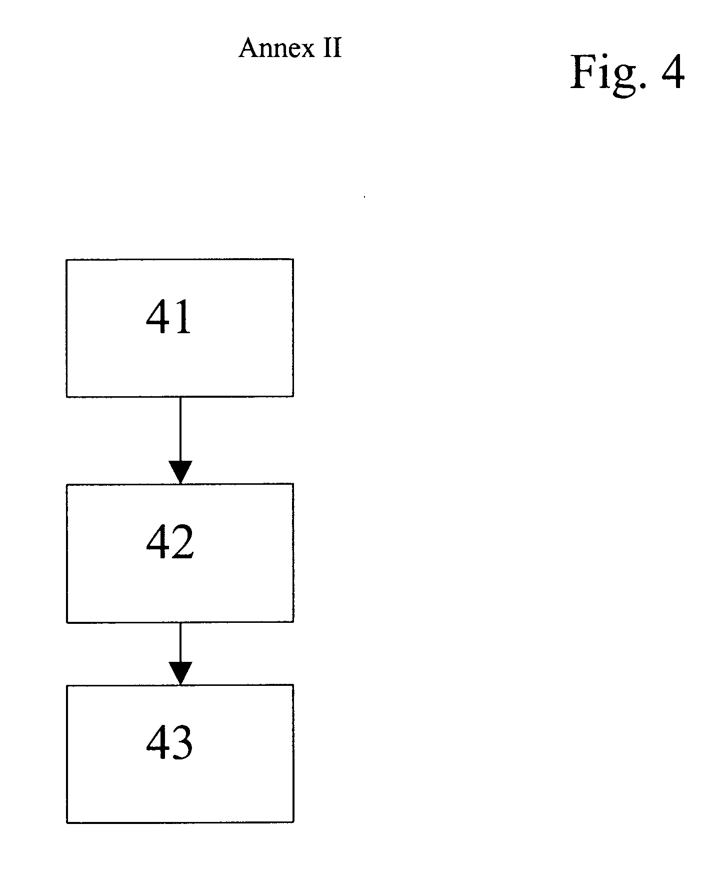

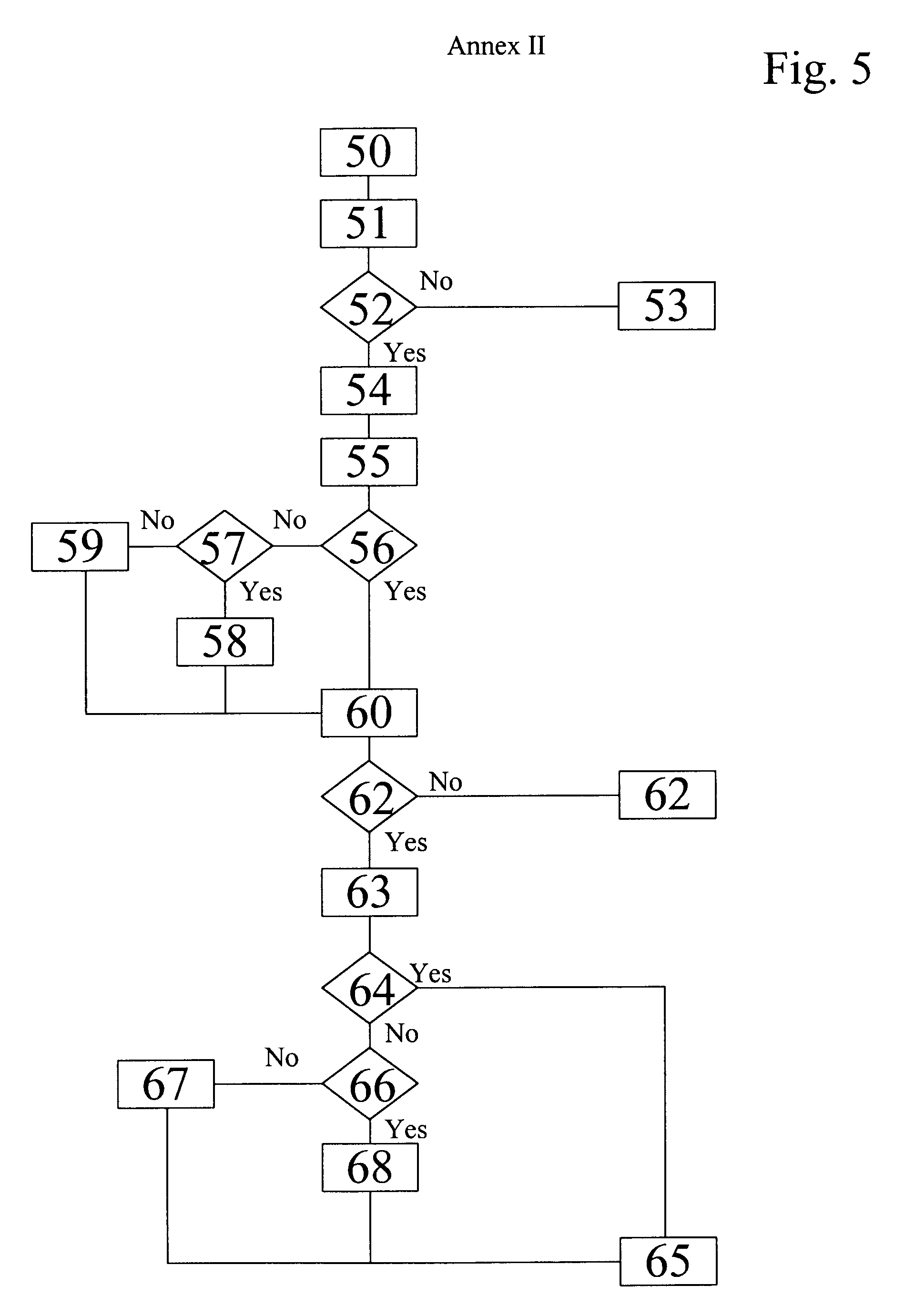

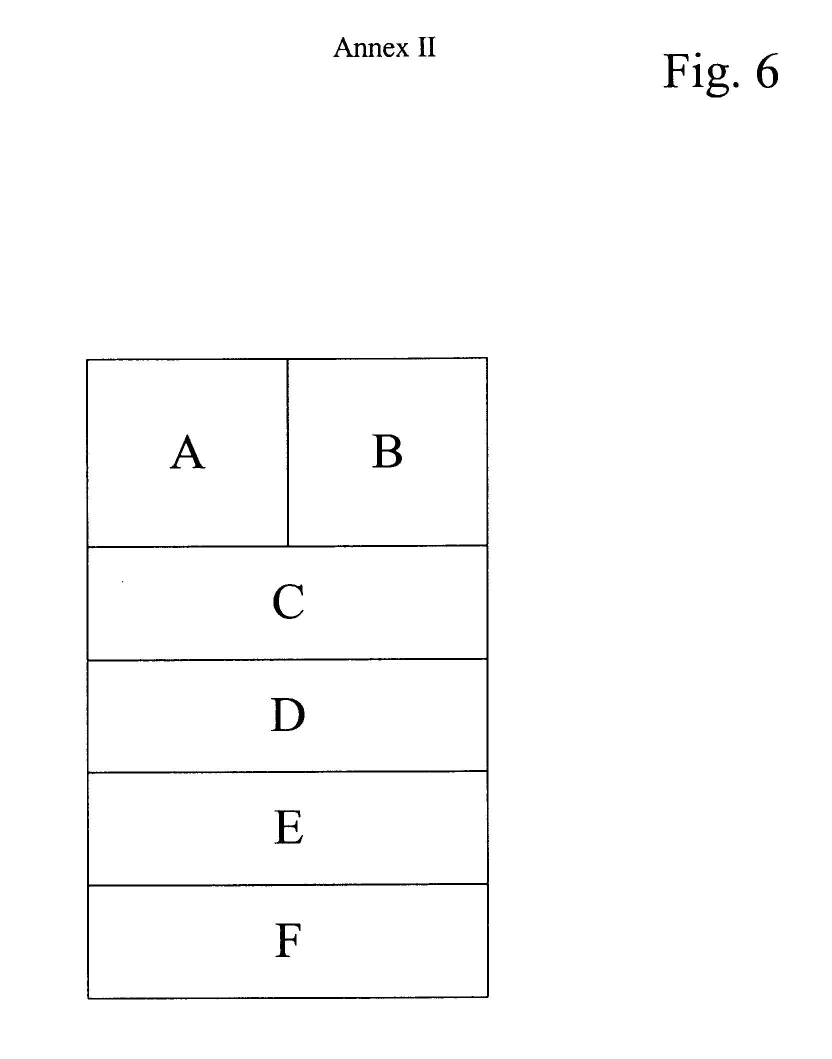

## Claims

1. A network portal system, which serves for linking, via a communication network (3), a plurality of provider systems (1, 1') with a plurality of client systems (2, 2'), each said provider system (1, 1') offering content according to a predetermined communication scheme of a plurality of different communication schemes, said content being information which is transmittable over said network (3), each said client system (2, 2') supporting a predetermined communication scheme of said plurality of different communication schemes, said network portal system comprising:
a) webtop means (11) for receiving a content request from a client system (2, 2'), said request comprising a content indicator being indicative of the content, and an indicator of the requesting client system (2, 2'), said client system indicator specifying the communication scheme supported by said client system (2, 2),
b) universal content broker means (13) for selecting a provider system (1, 1') which is able to provide said requested content,
c) for accessing said selected provider system (1, 1'), and
d) for retrieving said requested content from said accessed provider system (1, 1'),
e) said webtop means (11) being further adapted for rendering the retrieved content to said requesting client system (2, 2') according to the communication scheme of said requesting client system (2, 2').

2. The system according to claim 1, whereby said universal content broker means (13) are further adapted for selecting said provider system (1, 1') by searching a register (15) comprising accessible provider systems (1, 1').

3. The system according to claim 2, whereby said universal content broker means (13) are further adapted for maintaining said register (15).

4. The system according to the preceding claim, whereby said universal content broker means (13) are further adapted for transmitting content to provider systems (2, 2').

5. The system according to one of the preceding claims, further comprising application program means (14, 14', 14") for rendering application program services to client systems (2, 2').

6. The system according to one of the preceding claims, whereby said universal content broker means (13) have access to local storage means (16) for storing content therein.

7. The system according to one of the preceding claims, whereby said universal content broker means (13) are adapted for associating property values to content and storing said property values in storage means (17).

8. The system according to the preceding claim, whereby said universal content broker means (13) are further adapted for setting, and/ or reading said property values.

9. The system according to the preceding claim, whereby said property values are used to render client specific representation of content.

10. The system according to the preceding claims, said universal content broker means (13) are further adapted for notifying predetermined client systems when predetermined content is processed by said universal content broker means (13).

11. The system according to the preceding claims, said universal content broker means (13) are further adapted for notifying predetermined client systems when new content is created by said universal content broker means (13).

12. The system according to one of the preceding claims, further comprising means (18, 18', 18") for converting content compliant with a predetermined communication scheme into content compliant with another communication scheme.

13. The system according to one of the preceding claims, wherein said webtop means (11) are further adapted for rendering content over a secure network channel to a client system (2, 2').

14. The system according to one of the preceding claims, wherein said webtop means (11) are further adapted to render content to an individual client system (2, 2') according to predetermined individual access rights.

15. The system according to one of the preceding claims, wherein said webtop means (11) have access to a plurality of templates, each said template defining the structure of said requested content according to a particular client system (2, 2').

16. The system according to one of the preceding claims, wherein said webtop means (11) are further adapted for rendering content according to predetermined stylesheets, each said stylesheet defining visual presentation of said requested content.

17. The system according to one of the preceding claims, wherein said content is of the type of: file systems, databases, mails, news, mail messages, news messages.

18. The system according to one of the preceding claims, wherein said content can be hierarchically ordered according to a parent-, peer-, child-relationship, respectively.

19. The system according to one of the preceding claims, wherein said content is associated with predetermined tasks, whereby each task is indicative of content properties or commands admitted to operate on said content.

20. The system according to one of the preceding claims, further comprising a network server (12) for connecting to said network (3).

21. A method for linking, via a communication network (3), a plurality of provider systems (1, 1') with a plurality of client systems (2, 2'), each said provider system (1, 1') offering content according to a predetermined communication scheme of a plurality of different communication schemes, said content being information which is transmittable over said network (3), each said client system (2, 2') supporting a predetermined communication scheme of said plurality of different communication schemes, said method comprising the following steps:
a) receiving (100) a content request from a client system (2, 2'), said request comprising a content indicator being indicative of the content, and an indicator of the requesting client system (2, 2'), said client system indicator specifying the communication scheme supported by said client system (2, 2),
b) selecting (200) a provider system (1, 1') which is able to provide said requested content,
c) accessing (300) said selected provider system (1, 1'),
d) retrieving (400) said requested content from said accessed provider system (1, 1'),
e) rendering (500) the retrieved content to said requesting client system (2, 2') according to the communication scheme of said requesting client system (2, 2').

22. The method according to the preceding claim, whereby said provider system (13) is selected by searching a register comprising accessible provider systems (1, 1').

23. The method according to the preceding claim, further comprising a step of transmitting content to provider systems (2, 2').

24. The method according to one of the preceding method claims, further comprising rendering application program services to client systems (2, 2').

25. The method according to one of the preceding method claims, further comprising accessing to local storage means for storing content therein.

26. The method according to one of the preceding method claims, further comprising associating property values to content and storing said property values.

27. The method according to the preceding method claim, further comprising setting, and/ or reading said property values.

28. The method according to the preceding method claim, whereby said property values are used to render client specific representation of content.

29. The method according to one of the preceding method claims, further comprising notifying predetermined client systems (2, 2') when predetermined content is processed.

30. The method according to one of the preceding method claims, whereby predetermined client systems are notified when new content is created.

31. The method according to one of the preceding method claims, whereby content compliant with a predetermined communication scheme is converted into content compliant with another communication scheme.

32. The method according to one of the preceding method claims, whereby content is rendered over a secure network channel to a client system (2, 2').

33. The method according to one of the preceding method claims, whereby content is rendered to an individual client system (2, 2') according to predetermined individual access rights.

34. The method according to one of the preceding method claims, whereby a plurality of templates is accessed, each said template defining the structure of said requested content according to a particular client system (2, 2').

35. The method according to one of the preceding method claims, whereby content is rendered according to predetermined stylesheets, each said stylesheet defining visual presentation of said requested content.

36. The method according to one of the preceding method claims, whereby said content is of the type of: file systems, databases, mails, news, mail messages, news messages.

37. The method according to one of the preceding method claims, whereby said content can be hierarchically ordered according to a parent-, peer-, child-relationship, respectively.

38. The method according to one of the preceding method claims, whereby said content is associated with predetermined tasks, whereby each task is indicative of content properties or commands admitted to operate on said content.

39. The method according to one of the preceding method claims, whereby an hierarchical view of content can be produced, which view may be different to the physical structure on the content.

40. A computer program for performing the method according to one of the method claims.

41. Data carrier means containing computer software for performing the method according to one of the method claims.
